(19) Europäisches Patentamt
European Patent Office
Office européen des brevets

(11) EP 3 475 369 B1

(12) **EUROPEAN PATENT SPECIFICATION**

(45) Date of publication and mention of the grant of the patent:
**18.01.2023 Bulletin 2023/03**

(21) Application number: **17737403.0**

(22) Date of filing: **14.06.2017**

(51) International Patent Classification (IPC):
***C09D 7/40*** *(2018.01)*

(52) Cooperative Patent Classification (CPC):
**C09D 1/00; C09D 5/004; C09D 7/62; C09D 7/67; G02B 5/0825; G02B 5/12; G02B 5/28;** C08K 3/22; C08K 9/04; C08K 2003/2244

(86) International application number:
**PCT/US2017/037353**

(87) International publication number:
**WO 2018/005088 (04.01.2018 Gazette 2018/01)**

(54) **COMPOSITIONS COMPRISING NANOPARTICLES FUNCTIONALIZED WITH AN ALPHA-HYDROXY ACID OR SALT, ARTICLES, AND METHODS**

ZUSAMMENSETZUNGEN MIT ALPHA-HYDROXYSÄURE- ODER -SALZFUNKTIONALISIERTEN NANOPARTIKELN UND VERFAHREN

COMPOSITIONS COMPRENANT DES NANOPARTICULES FONCTIONNALISÉES AVEC UN ACIDE OU UN SEL ALPHA-HYDROXY, ARTICLES ET PROCÉDÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2016 US 201662354974 P**

(43) Date of publication of application:
**01.05.2019 Bulletin 2019/18**

(73) Proprietor: **3M Innovative Properties Company**
**St. Paul, MN 55133-3427 (US)**

(72) Inventors:
- **SCHMIDT, Daniel, J.**
  **Saint Paul**
  **MN 55133-3427 (US)**
- **COONCE, Benjamin, R.**
  **Saint Paul**
  **MN 55133-3427 (US)**
- **BUCKANIN, Richard, S.**
  **Saint Paul**
  **MN 55133-3427 (US)**

(74) Representative: **Mathys & Squire**
**Theatinerstraße 7**
**80333 München (DE)**

(56) References cited:

| | |
|---|---|
| **EP-A1- 2 463 231** | **WO-A1-2009/029856** |
| **WO-A1-2015/095317** | **WO-A1-2016/039820** |
| **US-A1- 2009 061 183** | **US-A1- 2015 301 247** |

- **ILKER DINCER ET AL: "Effect of the number of iron oxide nanoparticle layers on the magnetic properties of nanocomposite LbL assemblies", JOURNAL OF MAGNETISM AND MAGNETIC MATERIALS, vol. 324, no. 19, 15 May 2012 (2012-05-15) , pages 2958-2963, XP028496874, ISSN: 0304-8853, DOI: 10.1016/J.JMMM.2012.04.002 [retrieved on 2012-05-15]**
- **M. BERG ET AL: "<title>Self-assembled nanostructured multilayered spectral filters</title>", PROCEEDINGS OF SPIE, vol. 6172, 16 March 2006 (2006-03-16), pages 61720W-61720W-5, XP055101441, ISSN: 0277-786X, DOI: 10.1117/12.659384**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

This disclosure relates to compositions including surface-modified nanoparticles, articles, and methods of making same.

### Background

Layer-by-layer (LBL) self-assembly is a coating technique that allows precise control of coating thickness on the nanoscale, environmentally friendly coating from aqueous solutions, and conformal coating of non-planar substrates with a wide material set including both polymers and nanoparticles. A number of academic researchers have published on layer-by-layer optical coatings for increased reflectivity or multilayer optics for anti-reflection, UV reflection, IR reflection, etc. In addition, Svaya Nanotechnologies, Inc. has utilized titania ($TiO_2$) nanoparticles to fabricate infrared (IR) reflective coatings (WO 2013/052927 (Krogman et al.)). In most cases, $TiO_2$ nanoparticles (or water-stable, molecular, titania precursors) are alternately deposited with oppositely charged polymers. $TiO_2$ is often the material of choice because it has the highest refractive index of materials that are transparent in the visible light range.

Patent application US2009061183 discloses zirconia fine particles with a shell formed from antimony pentoxide and/or silica which are stable in an acidic region as well as in an alkaline region, and which may be adjusted in refractive index in a predetermined range. It further discloses a substrate with a hard coat film composed of composite oxide particles formed on at least one surface of the substrate and a matrix component, wherein the composite oxide particles are composite oxide particles having a core-shell structure composed of a core formed from zirconium oxide and a shell formed from antimony pentoxide and/or silica.

Patent application WO2009029856 discloses a method of preparing stable, transparent photocatalytic titanium dioxide sols. The method involves thermal treatment of a suspension of amorphous titanium dioxide in the presence of certain alpha-hydroxy acids. The sols comprise titanium dioxide particles in the anatase form having a crystallite size less than about 10 nm and exhibit excellent stability and transparency at basic, neutral, and acid pH.

Patent application EP2463231 discloses core-shell type composite oxide fine particles in which the core particles are oxide fine particles or composite oxide fine particles that do not contain silicon and/or aluminum as main components. The surface of the core particles is covered with a shell including a composite oxide that contains silicon and aluminum as main components, the shell containing silicon and aluminum in a weight ratio in terms of oxides, SiO 2 /Al 2 O 3, in the range of 2.0 to 30.0.

Patent application US2015301247 discloses an optical reflection film which has a base and, formed thereon, at least one unit obtained by laminating a high refractive index layer and a low refractive index layer, in which the low refractive index layer contains silica particles onto which a silanol-modified polyvinyl alcohol has been adsorbed.

Patent application WO2016039820 discloses a retroreflective article may include a binder layer (114); a layer of transparent microspheres (108) partially embedded in the binder layer; and reflective layer (110) disposed between the binder layer and the microspheres. The reflective layer (110) can include a dielectric mirror, which can include a first stack (115) and a second stack (111) positioned in planar contact with the first stack, wherein each of the first stack and the second stack comprises at least one bilayer (119), wherein each bilayer comprises a first material with a first bonding group and a second material with a complementary second bonding group. A transfer article can include the retroreflective article and a carrier web. The method disclosed can include partially embedding transparent microspheres in a carrier web; applying the reflective layer to the microspheres, and applying a binder layer composition to the reflective layer.

Patent application WO2015095317 discloses an article comprising a substrate and a plurality of layers deposited by layer-by-layer self-assembly disposed on the substrate. A portion of the layers comprise inorganic oxide nanoparticles comprising a phosphorous-containing surface treatment. Also described is an article comprising a bi-layer, the bi-layer comprises a monolayer of a polycation and a monolayer of a polyanion. The polyanion comprises inorganic oxide nanoparticles comprising a phosphorous-containing surface treatment. The polycations may be a polyelectrolyte or inorganic oxide nanoparticles.

ILKER DINCER ET AL, "Effect of the number of iron oxide nanoparticle layers on the magnetic properties of nanocomposite LbL assemblies", JOURNAL OF MAGNETISM AND MAGNETIC MATERIALS, vol. 324, no. 19, doi:10.1016/J.JMMM.2012.04.002, ISSN 0304-8853, (20120515), pages 2958 - 2963, discloses aqueous colloidal suspension of iron oxide nanoparticles oxide.

M. BERG ET AL, "PROCEEDINGS OF SPIE, (20060316), vol. 6172, doi:10.1117/12.659384, ISSN 0277-786X, pages 61720W - 61720W-5 discloses multilayered optical filters formed using layer-by-layer self-assembly processes. The molecular-level self-assembly is an aqueous solution-based process that is performed at room temperature and pressure.

## Summary

In a first aspect, a composition is provided. The composition includes water; a base; and surface-modified inorganic oxide nanoparticles dispersed in the water. The surface-modified inorganic oxide nanoparticles are functionalized with an alpha-hydroxy acid or salt thereof, wherein the alpha-hydroxy acid or salt is of Formula I:

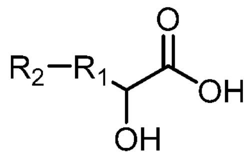

I.

Wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

In a second aspect, a method of making a composition is provided. The method includes dispersing surface-modified inorganic oxide nanoparticles in an aqueous solvent, the surface-modified inorganic oxide nanoparticles functionalized with an alpha-hydroxy acid or salt thereof; and adjusting the pH of the dispersion to at least 4.0 with a base. The alpha-hydroxy acid or salt is of Formula I, according to the first aspect above.

In a third aspect, a method of making an article is provided. The method includes obtaining a first composition including water; a base; and surface-modified inorganic oxide nanoparticles dispersed in the water, the surface-modified inorganic oxide nanoparticles functionalized with an alpha-hydroxy acid or salt thereof; obtaining a second composition comprising a polycationic polymer or a dispersion of inorganic oxide nanoparticles; and disposing onto a substrate a plurality of layers by layer-by-layer self-assembly of the first composition and the second composition. The alpha-hydroxy acid or salt is of Formula I, according to the first aspect above.

In a fourth aspect, an article is provided. The article includes a substrate and a plurality of layers comprising bi-layers. A portion of the layers comprise surface-modified inorganic oxide nanoparticles functionalized with an alpha-hydroxy acid or salt thereof. The alpha-hydroxy acid or salt is of Formula I, according to the first aspect above.

In a fifth aspect, a dielectric mirror is provided. The dielectric mirror includes a substrate; a first stack of bi-layers disposed on the substrate; and a second stack of bi-layers positioned in planar contact with the first stack. Each bi-layer in the first stack of bi-layers comprises surface-modified inorganic oxide nanoparticles functionalized with an alpha-hydroxy acid or salt thereof. The alpha-hydroxy acid or salt is of Formula I, according to the first aspect above. The second stack of bi-layers exhibits a refractive index of less than 1.50.

In a sixth aspect, an exposed lens retroreflective article is provided. The exposed lens retroreflective article includes a binder layer; a layer of transparent microspheres partially embedded in the binder layer; and a reflective layer disposed between the binder layer and the microspheres. The reflective layer includes the dielectric mirror according to the fifth aspect above.

## Brief Description of the Drawings

- **Fig. 1** is a schematic cross sectional view of an illustrative article 500 comprising a substrate 550 and a plurality of layers deposited by layer-by-layer self-assembly 510, disposed on substrate 550;
- **Fig. 2** is a schematic cross sectional view of an illustrative article 501 comprising a substrate 551 including a coating 560 and a plurality of layers deposited by layer-by-layer self-assembly 510, disposed on coating 560;
- **Fig. 3** is a schematic cross sectional view of an embodiment of the plurality of layers deposited by layer-by-layer self-assembly 510;
- **Fig. 4** is a schematic cross sectional view of an illustrative article 100 comprising a multilayer optical film 130 and a plurality of layers deposited by layer-by-layer self-assembly 110, disposed on multilayer optical film 130;
- **Fig. 4A** is a schematic cross sectional view of an illustrative multilayer optical film 130;
- **Fig. 4B** is a schematic cross sectional view of the plurality of layers deposited by layer-by-layer self-assembly 110; and
- **Fig. 5** is a schematic cross sectional view of an exposed lens retroreflective article including an exemplary dielectric mirror.

## Detailed Description

As used in this application:

"aqueous" means containing at least 50% by weight of water;

"base" refers to a chemical species that donates electrons or hydroxide ions or that accepts protons.

"bi-layer" refers to a thin film comprising a layer of a first material and a layer of a second material. As described herein, in some embodiments, a bilayer refers to the combination of a first layer of a first material (e.g., a polycation) having a first bonding group and a second layer of a second material (e.g., a polyanion) having a second bonding group that is complementary to the first bonding group. A first layer can comprise polymers and/or nanoparticles. Similarly, a second layer can comprise polymers and/or nanoparticles. As further described herein, in some embodiments bilayers are conveniently prepared using a layer-by-layer (LBL) self-assembly process;

"stack" refers to a thickness of material comprising one or more bi-layers.

"polymer" means organic polymers and copolymers (i.e., polymers formed from two or more monomers or comonomers, including terpolymers, for example), as well as copolymers or polymers that can be formed in a miscible blend by, for example, coextrusion or reaction, including transesterification, for example. Block, random, graft, and alternating polymers are included;

"polyion" refers to a polyelectrolyte or inorganic oxide particle that is (negatively or positively) charged in aqueous solution (water);

"polycation" refers to a polyelectrolyte or inorganic oxide particle that is positively charged in aqueous solution (water);

"polyanion" refers to a polyelectrolyte or inorganic oxide particle that is negatively charged in aqueous solution (water);

"polyelectrolytes" are polymers whose repeating units bear an electrolyte group. The electrolyte groups can dissociate in aqueous solutions (water), making the polymers charged. Polyelectrolyte properties are thus similar to both electrolytes (salts) and polymers (high molecular weight compounds), and are sometimes called polysalts. Like salts, their solutions are electrically conductive. "Strong polyelectrolytes" possess permanent charges across a wide range of pH (e.g., polymers containing quaternary ammonium groups or sulfonic acid groups). "Weak polyelectrolytes" possess a pH-dependent level of charge (e.g., polymers containing primary, secondary, or tertiary amines, or carboxylic acids);

"alkylene" refers to a divalent radical of an alkane. Suitable alkylene groups often have 1 to 20 carbon atoms, 1 to 12 carbon atoms, 1 to 8 carbon atoms, or 1 to 4 carbon atoms.

"arylene" refers to a divalent radical of an arene compound. Suitable arylene groups often have 6 to 18 carbon atoms or 6 to 12 carbon atoms. For example, the arylene can be phenylene or biphenylene.

"polyether" refers to a poly(alkylene oxide). Suitable polyethers often have 2 to 500 alkylene oxide groups or 2 to 200 alkylene oxide groups.

"polyalcohol" refers to a polyol. Suitable polyalcohols often have two to five, or two to four, non-phenolic hydroxyl groups. Examples of useful polyalcohols include, but are not limited to, 1,2-ethanediol, 1,2-propanediol, 1,3-propanediol, 1,4-butanediol, 1,3-butanediol, 2-methyl-1,3-propanediol, 2,2-dimethyl-1,3-propanediol, and 2-ethyl-1,6-hexanediol, 1,5-pentanediol, 1,6-hexanediol, 1,8-octanediol, neopentyl glycol, glycerol, trimethylolpropane, 1,2,6-hexanetriol, trimethylolethane, pentaerythritol, quinitol, mannitol, diethylene glycol, triethylene glycol, tetraethylene glycol, glycerine, 2-ethyl-2-(hydroxymethyl)-1,3-propanediol, 2-ethyl-2-methyl-1,3-propanediol, pentaerythritol, 2-ethyl-1,3-pentanediol, and 2,2-oxydiethanol, sorbitol, 1,4-cyclohexane dimethanol, 1,4-benzene dimethanol, 2-butene-1,4-diol, and polyalkoxylated bisphenol A derivatives.

"alpha-hydroxy" refers to a compound comprising carboxylic acid substituted with a hydroxyl group on the adjacent carbon.

"carboxylic acid group" in a chemical formula refers to a -C(O)OH group.

"sulfuric acid group" in a chemical formula refers to a $-OS(O_2)OH$ group.

"sulfonic acid group" in a chemical formula refers to a $-S(O)_2OH$ group.

"hydroxamic acid group" in a chemical formula refers to a -C(O)N(OH)R group.

"sulfinic acid group" in a chemical formula refers to a -SO(OH) group.

"(meth)acryl" refers to methacrylate, methacrylamide, acrylate, or acrylamide;

"index of refraction", also referred to as "index" or "RI", refers to a refractive index of a material in the plane of the material with respect to light at 633 nm and normal or near normal (i.e., 8 degrees) incidence, unless otherwise indicated;

"high refractive index" and "low refractive index" are relative terms; when two layers are compared in both in-plane directions of interest, the layer that has a greater average in-plane refractive index is the high refractive index layer, and the layer that has a lower average in-plane refractive index is the low refractive index layer;

"birefringent" means that the indices of refraction in orthogonal x, y, and z directions are not all the same. Index of refraction is designated as $n_x$, $n_y$, and $n_z$ for x, y, and z directions, respectively. For the polymer layers described

herein, the axes are selected so that x and y axes are in the plane of the layer and the z axis is normal to the plane of the layer and typically corresponds to the thickness or height of the layer. Where a refractive index in one in-plane direction is larger than a refractive index in another in-plane direction, the x-axis is generally chosen to be the in-plane direction with the largest index of refraction, which sometimes corresponds to one of the directions in which the optical film is oriented (e.g., stretched). Birefringence values are expressed herein with respect to light at 633 nm and normal incidence, unless otherwise indicated;

"in-plane birefringence, $\Delta n_{in}$" of a uniaxially stretched film concerns the difference of the indices ($n_x$ and $n_y$) in the orthogonal in-plane directions. More specifically for a uniaxially stretched film, in-plane birefringence refers to the difference between the stretching direction and the non-stretching direction. For example, assuming a film is uniaxially stretched in the machine direction (MD), the in-plane birefringence is expressed as the following:

$$\Delta n_{in} = n_x - n_y$$

where $n_x$ is the refractive index in the stretching direction (in this case, MD), and $n_y$ is the refractive index in the non-stretching direction (in this case, transverse direction (TD)). For a biaxially stretched film, the in-plane birefringence is relatively small and sometimes close to zero if balanced. Instead, out-of-plane birefringence is more indicative of the birefringent nature of the stretched film;

"out-of-plane birefringence, $\Delta n_{out}$"of a biaxially oriented film, concerns the difference between average of in-plane indices ($n_x$ and $n_y$) and the index normal to the film ($n_z$). Out-of-plane birefringence can be expressed as the following:

$$\Delta n_{out} = \frac{(n_x + n_y)}{2} - n_z$$

where $n_x$ is RI in MD and $n_y$ is RI in TD and $n_z$ is RI normal to the film. Out-of-plane birefringence can also be used to measure the birefringent nature of uniaxially stretched films;

"reflectivity" refers to reflectivity at normal incidence which is understood to include slight deviations from 90 degrees (e.g., 8 degree deviation) unless specified otherwise.

Unless specified otherwise, a bandwidth refers to any increment of at least 10 nm of electromagnetic radiation between 290 nm and 1100 nm. A bandwidth may also be greater than 10 nm such as 25 nm, 50 nm, or 100 nm. As used herein, visible light refers to the bandwidth from 400 nm to 700 nm; ultraviolet refers to the bandwidth 290 to 400 nm; UV-blue is the bandwidth from 350 to 490 nm; and near infrared refers to the bandwidth from 870 to 1100 nm.

In a first aspect, a composition is provided. The composition comprises water; a base; and surface-modified inorganic oxide nanoparticles dispersed in the water. The surface-modified inorganic oxide nanoparticles are functionalized with an alpha-hydroxy acid or salt thereof, wherein the alpha-hydroxy acid or salt is of Formula I:

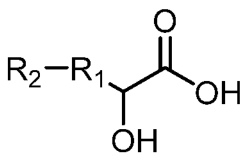

I

wherein $R_1$ is selected from a polyether or a polyalcohol; and $R_2$ is selected from a linear or branched alkyl, aryl, alkylene, or arylene group; a hydroxyl group; or H; or

wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof. Typically, the composition has a pH of at least 4.0, at least 6.0, at least 8.0, at least 9.0, or at least 10.0.

In a second aspect, a method of making a composition is provided. The method comprises:

dispersing surface-modified inorganic oxide nanoparticles in an aqueous solvent; and adjusting the pH of the dispersion to at least 4.0 with a base. The surface-modified inorganic oxide nanoparticles are functionalized with an alpha-hydroxy acid or salt thereof, wherein the alpha-hydroxy acid or salt is of Formula I:

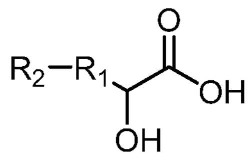

I

wherein $R_1$ is selected from a polyether or a polyalcohol; and $R_2$ is selected from a linear or branched alkyl, aryl, alkylene, or arylene group; a hydroxyl group; or H; or

wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

The below description relates to at least the first aspect and the second aspect.

Suitable alkyl groups can be linear, branched, cyclic, or a combination thereof. The alkyl group often has up to 20 carbon atoms, up to 18 carbon atoms, up to 16 carbon atoms, up to 12 carbon atoms, up to 10 carbon atoms, up to 6 carbon atoms, or up to 4 carbon atoms. For example, linear alkyl groups can have 1 to 20 carbon atoms, branched alkyl groups can have 3 to 20 carbon atoms, and cyclic alkyl groups can have 3 to 20 carbon atoms or 6 to 20 carbon atoms.

As used herein, the term "aryl" refers to a monovalent group that includes at least one aromatic carbocyclic ring. The aryl group can include additional ring structures fused or bonded to the aromatic carbocyclic ring. Any additional ring structures can be saturated, partially unsaturated, or unsaturated. Suitable aryl groups often have 6 to 20 carbon atoms, 6 to 12 carbon atoms, or 6 to 10 carbon atoms. The aryl group is often phenyl.

The base is not particularly limited, and usually comprises an alkaline hydroxide, an alkaline earth hydroxide, a quaternary ammonium hydroxide, an alkaline carbonate, an alkaline earth carbonate, an alkaline bicarbonate, an alkaline earth bicarbonate, an alkaline oxide, an alkaline earth oxide, or combinations thereof. In certain embodiments, the base comprises an alkaline hydroxide (e.g., NaOH) or a quaternary ammonium hydroxide (e.g., tetramethylammonium hydroxide). In most embodiments, the amount of base employed depends on the weight percent needed to achieve a pH of at least 4.0, at least 6.0, at least 8.0, at least 9.0, or at least 10.0 for a particular composition, as will be understood by one of skill in the art.

The surface functionalization can also be utilized to alter the charge of the inorganic oxide nanoparticles. For example, a polycation comprising positively charged inorganic oxide nanoparticles can be converted to a polyanion. Further, the surface treatment can also be utilized to modify the isoelectric point, i.e., the pH at which there is no net charge and the nanoparticles can precipitate from solution. These technical effects are applicable to most any inorganic oxide nanoparticle, regardless of the refractive index. Various inorganic oxide nanoparticles have been described for use, for instance, for layer-by-layer self-assembly, some of which are described in Kurt et al., US 2010/0290109; incorporated herein by reference.

In some embodiments, when it is desired for the composition to provide a light transmissive article, the size of such nanoparticles is chosen to avoid significant visible light scattering. The surface modified inorganic oxide nanoparticles have a (e.g., unassociated) primary particle size or associated particle size of greater than 1 nanometers (nm), 5 nm or 10 nm. The primary or associated particle size is generally less than 100 nm, 75 nm, or 50 nm. Typically the primary or associated particle size is less than 40 nm, 30 nm, or 20 nm. It is preferred that the nanoparticles are unassociated.

The average particle size of the nanoparticles of the dried composition (e.g., self-assembled layers) can be measured using transmission electron microscopy (TEM) or scanning electron microscopy (SEM), for example. The average particle size of the nanoparticles in the nanoparticle suspension can be measured using dynamic light scattering. "Agglomerate" refers to a weak association between primary particles which may be held together by charge or polarity and can be broken down into smaller entities. "Primary particle size" refers to the mean diameter of a single (non-aggregate, non-agglomerate) particle. As used herein "aggregate" with respect to particles refers to strongly bonded or fused particles where the resulting external surface area may be significantly smaller than the sum of calculated surface areas of the individual components. The forces holding an aggregate together are strong forces, for example covalent bonds, or those resulting from sintering or complex physical entanglement. Although agglomerated nanoparticles can be broken down into smaller entities such as discrete primary particles such as by application of a surface treatment; the application of a surface treatment to an aggregate simply results in a surface treated aggregate. In some embodiments, a majority of the nanoparticles (i.e., at least 50%) are present as discrete unagglomerated nanoparticles. For example, at least 70%, at least 80% or at least 90% of the nanoparticles are present as discrete unagglomerated nanoparticles.

Surface modified colloidal nanoparticles can be substantially fully condensed. Fully condensed nanoparticles (with the exception of silica) typically have a degree of crystallinity (measured as isolated metal oxide particles) greater than 55%, preferably greater than 60%, and more preferably greater than 70%. For example, the degree of crystallinity

can range up to about 86% or greater. The degree of crystallinity can be determined by X-ray diffraction techniques. Condensed crystalline (e.g., zirconia) nanoparticles have a high refractive index whereas amorphous nanoparticles typically have a lower refractive index.

Various high refractive index inorganic oxide sols are commercially available. Zirconia sols are available from Nalco Chemical Co. (Naperville, IL) under the trade designation "NALCO 00SS008", Buhler AG (Uzwil, Switzerland) under the trade designation "Buhler zirconia Z-WO sol" and Nissan Chemical America Corporation (Houston, TX) under the trade name "NANOUSE ZR". A nanoparticle dispersion that comprises a mixture of tin oxide and zirconia covered by antimony oxide (RI ~1.9) is commercially available from Nissan Chemical America Corporation (Houston, TX) under the trade designation "HX-05M5". A tin oxide nanoparticle dispersion (RI ~2.0) is commercially available from Nissan Chemicals Corp. under the trade designation "CX-S501M".

In some embodiments, the inorganic oxide nanoparticles comprise titania. Various forms of titania can be utilized including anatase, brookite, rutile and amorphous forms. Anatase titania nanoparticle (5-15 nm diameter) dispersions are commercially available from U.S. Research Nanomaterials (Houston, TX) as an aqueous suspension at 15 wt%. $TiO_2$ sols are also available dispersed in an acidic or basic solution from Ishihara Sangyo Kaisha Ltd. (Osaka, Japan). Titania has an isoelectric point at about pH 4-6 and thus can be used as a polyanion in layer-by-layer self-assembly at pH sufficiently above the isoelectric point, or the polycation in layer-by-layer self-assembly at pH sufficiently below the isoelectric point.

In some embodiments, the inorganic oxide nanoparticles comprise zirconia prepared using hydrothermal technology as described in U.S. Patent Publication No. 2006/0148950 (Davidson et al.) and U.S. Patent No. 6,376,590 (Kolb et al.). More specifically, a first feedstock that contains a zirconium salt is subjected to a first hydrothermal treatment to form a zirconium-containing intermediate and a byproduct. A second feedstock is prepared by removing at least a portion of the byproduct formed during the first hydrothermal treatment. The second feedstock is then subjected to a second hydrothermal treatment to form a zirconia sol that contains the zirconia particles.

The first feedstock is prepared by forming an aqueous precursor solution that contains a zirconium salt. The anion of the zirconium salt is usually chosen so that it can be removed during subsequent steps in the process for preparing the zirconia sol. Additionally, the anion is often chosen to be non-corrosive, allowing greater flexibility in the type of material chosen for the processing equipment such as the hydrothermal reactors.

In one method of at least partially removing the anions in the precursor solution, the precursor solution can be heated to vaporize an acidic form of the anion. For example, a carboxylate anion having no more than four carbon atoms can be removed as the corresponding carboxylic acid. More specifically, an acetate anion can be removed as acetic acid. Although the free acetic acid can be removed, at least a portion of the acetic acid is typically associated with the (e.g., zirconia) nanoparticle surface. Thus, the nanoparticles typically comprise associated volatile acid. Due to the associated acid, the zirconia nanoparticles can be positively charged and thus function as polycations.

Surface modification (e.g., functionalization) involves attaching surface treatment compounds to the inorganic oxide (e.g., zirconia) nanoparticles to modify their surface characteristics. The surface modification of the inorganic oxide nanoparticles in the colloidal dispersion can be accomplished in a variety of ways. The process generally involves mixing the inorganic nanoparticle with the alpha-hydroxy compounds in an aqueous sol. Optionally, a cosolvent can be added at this point, such as for example, 1-methoxy-2-propanol, ethanol, isopropanol, ethylene glycol, N,N-dimethylacetamide and 1-methyl-2-pyrrolidinone. The cosolvent can enhance the solubility of the surface modifying agents as well as the surface modified particles. The mixture comprising the inorganic sol and surface modifying agents is subsequently reacted at room or an elevated temperature, with or without mixing. Excess surface modifying agents can be removed from the suspension by techniques such as dialysis or diafiltration. In certain embodiments, dialysis and diafiltration are not required, but rather the suspension contains excess alpha-hydroxy acid or salt when employed (e.g., disposed on a substrate). The inorganic oxide nanoparticles comprising the surface treatment compound (e.g., functionalized nanoparticles) are often non-associated, non-agglomerated, or a combination thereof, in the aqueous dispersion.

The inorganic oxide nanoparticles are functionalized with an alpha-hydroxy acid or salt thereof. Suitable alpha-hydroxy acids or salts are of Formula I:

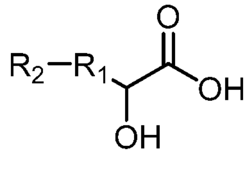 I;

wherein $R_1$ is selected from a polyether or a polyalcohol; and $R_2$ is selected from a linear or branched alkyl, aryl, alkylene, or arylene group; a hydroxyl group; or H; or

wherein $R_1$ is selected from a linear or branched alkyl, aryl, alkylene, or arylene group; or a covalent bond; and $R_2$

is selected from a carboxylic acid group, a sulfuric acid group, a sulfinic acid group, a sulfonic acid group, a hydroxamic acid, or a salt thereof.

In some embodiments, $R_1$ is a polyalcohol and $R_2$ is H. In other embodiments, $R_1$ comprises a linear or branched alkyl group and $R_2$ comprises a carboxylic acid group. In select embodiments, the alpha-hydroxy acid or salt is selected from citric acid, trisodium citrate, L-tartaric acid, sodium L-tartrate, L-malic acid, D-gluconic acid, sodium gluconate, D-glucuronic acid, and combinations thereof. Unexpectedly, inorganic oxide nanoparticles functionalized with alpha-hydroxy acids (or their salts) of Formula I were found to provide stable sols at a pH of at least 4, at least 5, at least 6, at least 8, at least 9, or a pH of at least 10, in particular when the pH of the sol was raised through the isoelectric point of the functionalized particles. In some embodiments, the sols are stable when the pH is raised from being acidic (i.e., below a pH of 7) to at least 8. In contrast, inorganic nanoparticles functionalized with various carboxylic acids having different but somewhat similar structures to Formula I did not provide stable sols at a pH, for instance, of at least 8. Such carboxylic acids that result in unstable sols include, for instance, malonic acid, lactic acid, maleic acid, and 1,2,4,5-butanetetracarboxylic acid (see, e.g., Example 21 below).

The amount of the surface-modified inorganic oxide nanoparticles in the composition is not particularly limited. In certain embodiments, the surface-modified inorganic oxide nanoparticles are present in an amount of at least 0.01, at least 0.03, at least 0.05, at least 0.08, at least 0.10, at least 0.25, at least 0.50, at least 1, at least 5, or at least 10 weight percent of the total composition; and up to 50, up to 45, up to 40, up to 35, up to 30, up to 25, up to 20, or up to 15 weight percent of the total composition. Stated another way, the surface-modified inorganic oxide nanoparticles can be present in an amount from 0.01 to 50 weight percent of the total composition, inclusive; or from 0.01 to 20 weight percent of the total composition; or from 1 to 15 weight percent of the total composition; or from 25 to 50 weight percent of the total composition.

In a third aspect, a method of making an article is provided. The method comprises:

obtaining a first composition comprising water; a base; and surface-modified inorganic oxide nanoparticles dispersed in the water, the surface-modified inorganic oxide nanoparticles functionalized with an alpha-hydroxy acid or salt thereof;

obtaining a second composition comprising a polycationic polymer or a dispersion of inorganic oxide nanoparticles; and

disposing onto a substrate a plurality of layers by layer-by-layer self-assembly of the first composition and the second composition.

The alpha-hydroxy acid or salt is of Formula I:

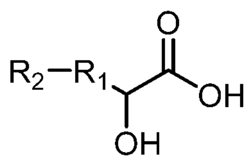

I

wherein $R_1$ is selected from a polyether or a polyalcohol; and $R_2$ is selected from a linear or branched alkyl, aryl, alkylene, or arylene group; a hydroxyl group; or H; or

wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

In a fourth aspect, an article is provided. The article comprises:

a substrate; and

a plurality of layers comprising bi-layers, wherein a portion of the layers comprise surface-modified inorganic oxide nanoparticles functionalized with an alpha-hydroxy acid or salt thereof, wherein the alpha-hydroxy acid or salt is of Formula I:

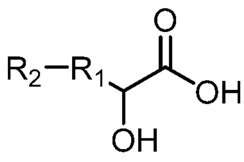

I

wherein $R_1$ is selected from a polyether or a polyalcohol; and $R_2$ is selected from a linear or branched alkyl, aryl, alkylene, or arylene group; a hydroxyl group; or H; or

wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

The below description relates to at least the third aspect and the fourth aspect.

With reference to **Fig. 1,** an illustrative article **500** generally comprises a substrate **550** and a plurality of layers **510** deposited by layer-by-layer self-assembly disposed on the substrate **550.** At least a portion of the layers comprise surface-modified inorganic oxide nanoparticles. The surface-modified inorganic oxide nanoparticles (e.g., zirconia nanoparticles) are functionalized with an alpha-hydroxy acid or salt thereof. Although **Fig. 1** depicts the plurality of layers deposited by layer-by-layer self-assembly on a single major surface, in another embodiment both major surfaces of the substrate **550** can comprise a plurality of layers **510** deposited by layer-by-layer self-assembly.

The plurality of layers disposed on the substrate or coating comprise at least two layers deposited by what is commonly referred to as a "layer-by-layer self-assembly process". This process is commonly used to assemble films or coatings of oppositely charged polyions such as polyelectrolytes and/or inorganic oxide particles electrostatically, but other functionalities such as hydrogen bond donor/acceptors, metal ions/ligands, and covalent bonding moieties can be the driving force for film assembly. Typically, this deposition process involves exposing the substrate having a surface charge, to a series of liquid solutions, or baths. This can be accomplished by immersion of the substrate into liquid baths (also referred to as dip coating), spraying, spin coating, roll coating, inkjet printing, and the like. Exposure to the first polyion (e.g., polyelectrolyte bath) liquid solution, which has charge opposite that of the substrate, results in charged species near the substrate surface adsorbing quickly. This establishes a concentration gradient and draws more polyelectrolyte from the bulk solution to the surface. Further adsorption occurs until a sufficient layer has developed to mask the underlying charge and reverse the net charge of the substrate surface. In order for mass transfer and adsorption to occur, this exposure time is typically on the order of minutes. The substrate is then removed from the first polyion (e.g., bath) liquid solution, and is then exposed to a series of water rinse baths to remove any physically entangled or loosely bound polyelectrolyte. Following these rinse (e.g., bath) liquid solutions, the substrate is then exposed to a second polyion (e.g., polyelectrolyte or inorganic oxide nanoparticle bath) liquid solution, which has charge opposite that of the first polyion (e.g., bath) liquid solution. Once again adsorption occurs, since the surface charge of the substrate is opposite that of the second (e.g., bath) liquid solution. Continued exposure to the second polyion (e.g., bath) liquid solution then results in a reversal of the surface charge of the substrate. A subsequent rinsing can be performed to complete the cycle. This sequence of steps is said to build up one layer pair, also referred to herein as a "bi-layer" of deposition and can be repeated as desired to add further layer pairs to the substrate.

Some examples of suitable processes include those described in Krogman et al., US 8,234,998; Hammond-Cunningham et al., US 2011/0064936; and Nogueira et al., US 8,313,798. Further layer-by layer dip coating can be conducted using a StratoSequence VI (nanoStrata Inc., Tallahassee, FL) dip coating robot. In some embodiments, the first composition has a pH of at least 8.0, at least 9.0, or at least 10.0. Optionally, the first composition and the second composition are each disposed onto the substrate to form at least 4 bi-layers, at least 6, bi-layers, at least 8 bi-layers, at least 10 bi-layers, at least 12 bi-layers, or at least 15 bi-layers; and up to 50 bi-layers, up to 40 bi-layers, up to 30 bi-layers, or up to 20 bi-layers.

In favored embodiments, the plurality of layers deposited by layer-by-layer self-assembly (i.e., self-assembled layers) comprise surface-modified inorganic oxide nanoparticles having a refractive index of at least 1.60. In some embodiments, the refractive index of the inorganic oxide nanoparticles is at least 1.65, at least 1.70, at least 1.75, at least 1.80, at least 1.85, at least 1.90, at least 1.95, at least 2.00, at least 2.05, or at least 2.10. The refractive index of the inorganic oxide nanoparticles is typically no greater than 2.55 or 2.61. Various high refractive index inorganic oxide nanoparticle are known such as titania, zirconia, alumina, tin oxides, antimony oxides, ceria, zinc oxide, lanthanum oxide, tantalum oxide, mixed metal oxides thereof, and mixtures thereof.

Each bi-layer in the first stack of bi-layers optionally further comprises a polycationic polymer or inorganic oxide nanoparticles. In many embodiments, the bi-layers comprise alternating first layers and second layers, wherein the first layers comprise the surface-modified inorganic oxide nanoparticles and the second layers comprise the polycationic polymer or inorganic oxide nanoparticles. In select embodiments, the second composition comprises zirconia nanoparticles as the inorganic oxide nanoparticles.

Without intending to be bound by theory, it is surmised that the functionalization of the nanoparticles with the alpha-hydroxy acid or salt improves the packing density of the nanoparticles during the layer-by-layer self-assembly. When the inorganic oxide nanoparticles are high refractive index particles, the improved packing density can result in less air being incorporated and the plurality of bi-layers having a higher refractive index. Surprisingly, the refractive index of the plurality of layers in certain embodiments is at least 1.62, at least 1.64, at least 1.66, at least 1.68, at least 1.70, at least 1.72, at least 1.74, or at least 1.76. The increase in refractive index as compared to the same (e.g., zirconia) inorganic oxide nanoparticles lacking the functionalization can be at least 0.05, or 0.10, or 0.15, or 0.20, or 0.25, or 0.30, or 0.35, or 0.40, and is typically no greater than about 0.45.

With reference to **Fig. 3,** in one embodiment, the plurality of layers **510** deposited by layer-by-layer self-assembly comprises one or more bi-layers comprising a polycation (e.g., polyelectrolyte) monolayer **512** and a polyanion monolayer **513.** The polyanion comprises or consists essentially of inorganic oxide nanoparticles having an alpha-hydroxy acid or salt-containing surface treatment, as described herein. In this embodiment, the plurality of layers deposited by layer-by-layer self-assembly comprises a plurality of alternating polymer-inorganic nanoparticle layers. In some embodiments, the polycation is a polyelectrolyte that is not a surface-functionalized material.

Altering the charge of the (e.g., zirconia) inorganic oxide nanoparticle is also useful for producing a plurality of alternating inorganic oxide nanoparticle layers, in the absence of a polyelectrolyte. With reference to **Fig. 3,** is this embodiment, the plurality of layers **510** deposited by layer-by-layer self-assembly comprises one or more bi-layers comprising a polycation monolayer **512** wherein the polycation comprises inorganic oxide nanoparticles having positively charged groups on the nanoparticle surface and a monolayer of inorganic nanoparticles functionalized with an alpha-hydroxy acid or salt **513,** as described herein. In this embodiment, the bi-layer or plurality of layers deposited by layer-by-layer self-assembly comprises a plurality of alternating inorganic nanoparticle-inorganic nanoparticle layers.

For example, the (e.g., zirconia) inorganic oxide nanoparticles that are positively charged due to the associated (e.g., acetic) acid, and function as polycations can be converted to polyanions wherein the (e.g., zirconia) inorganic oxide nanoparticles comprise negatively charged (e.g., alpha-hydroxy acid or salt) groups. The positively charged (e.g., zirconia) inorganic oxide nanoparticles (e.g., lacking the surface treatment) can be utilized as the polycation. Hence both the polyanion and polycation comprise (e.g., zirconia) inorganic oxide nanoparticles. This can result in bi-layers having high concentration of (e.g., zirconia) inorganic oxide nanoparticles. For example, the concentration of (e.g., zirconia) inorganic oxide nanoparticles of the bi-layer or plurality of bi-layers can be greater than 95 wt%. In this embodiment, the plurality of alternating inorganic oxide nanoparticle layers can consist essentially of functionalized inorganic oxide nanoparticles.

In other embodiments, the plurality of layers **510** deposited by layer-by-layer self-assembly comprise one or more bi-layers that form a high refractive index stack. A low refractive index stack is then alternated with a high refractive index stack. For example, with reference to **Fig. 4B,** a high refractive index stack **111** may comprise bi-layers of **112** that comprise high refractive index functionalized inorganic oxide (e.g., zirconia) nanoparticles comprising an alpha-hydroxy acid or salt surface treatment as described herein as a polyanion, and **113,** a polymeric polycation such as poly(diallyl-dimethyl ammonium chloride). In **Fig. 4B** the illustrative high refractive index stack **111** comprises 8 alternating bi-layers. The low refractive index stack **115** may comprise bi-layers of **116** that comprise low refractive index inorganic oxide nanoparticles, such as $SiO_2$, as a polyanion and **117,** a polymeric polycation such as poly(diallyl-dimethyl ammonium chloride). In **Fig. 4B** the illustrative low refractive index stack **115** comprises 4 alternating bi-layers. Each stack can be characterized as a high or low refractive index layer comprising a plurality of polymer-inorganic oxide bi-layers.

Various low refractive index nanoparticles can be used in the low refractive index stack such as silica or composite nanoparticles such as core-shell nanoparticles that comprise silica. A core-shell nanoparticle can include a core of an oxide (e.g., iron oxide) or metal (e.g., gold or silver) of one type and a shell of silica deposited on the core. Herein, "silica nanoparticles" refer to nanoparticles that include only silica as well as core-shell nanoparticles with a surface that includes silica. It is appreciated however, that unmodified silica nanoparticles commonly comprise hydroxyl or silanol functional groups on the nanoparticle surface, particularly when the nanoparticles are provided in the form of an aqueous dispersion. Aqueous dispersions of silica nanoparticles can also be ammonium or sodium stabilized. Silica has an isoelectric point at about pH 2 and can thus be used as a polyanion in the layer-by-layer self-assembly process at pH values sufficiently greater than 2.

Inorganic silica sols in aqueous media are well known in the art and available commercially. Silica sols in water or water-alcohol solutions are available commercially under such trade names as LUDOX (manufactured by E.I. duPont de Nemours and Co., Inc., Wilmington, DE), NYACOL (available from Nyacol Co., Ashland, MA) or NALCO (manufactured by Nalco Chemical Co., Naperville, IL). Some useful silica sols are NALCO 1115, 2326, 1050, 2327, and 2329 available as silica sols with mean particle sizes of 4 nanometers (nm) to 77 nm. Another useful silica sol is NALCO 1034a available as a silica sol with mean particle size of 20 nanometers. A useful silica sol is NALCO 2326 available as a silica sol with mean particle size of 5 nanometers. Additional examples of suitable colloidal silicas are described in U.S. Pat. No. 5,126,394 (Revis et al.).

Suitable polyelectrolytes include polycationic polymers (i.e., polycations), such as polyallylamines or polyethylenimines. Suitable polycationic polymers include, for instance and without limitation, linear and branched poly(ethylenimine), poly(allylamine hydrochloride), polyvinylamine, chitosan, polyaniline, polypyrrole, polyamidoamine, poly(vinylbenzyltriamethylamine), poly(diallyl-dimethyl ammonium chloride), poly(dimethylaminoethyl methacrylate), and poly(methacryloylamino)propyl-trimethylammonium chloride. Suitable polyanionic polymers include, but are not limited to, poly(vinyl sulfate), poly(vinyl sulfonate), poly(acrylic acid), poly(methacrylic acid), poly(styrene sulfonate), dextran sulfate, heparin, hyaluronic acid, carrageenan, carboxymethylcellulose, alginate, sulfonated tetrafluoroethylene based fluoropolymers such as NAFION, poly(vinylphosphoric acid), and poly(vinylphosphonic acid).

The molecular weight of the polyelectrolyte can vary, ranging from about 1,000 g/mole to about 1,000,000 g/mole. In some embodiments, the molecular weight (Mw) of the polyelectrolyte ranges from 50,000 g/mole to 500,000 g/mole, or from 100,000 g/mole to 200,000 g/mole.

The plurality of layers deposited by layer-by-layer self-assembly may optionally further comprise an organic light absorbing compound, an organic light stabilizing compound, or a combination thereof dispersed within and preferably covalently bonded to a polyelectrolyte, as described in WO 2014/193550 (Schmidt et al.).

The concentration of inorganic nanoparticles is typically at least 30 wt% of the dried bi-layer, high or low refractive index stack, or totality of self-assembled polymer-nanoparticle layers. The concentration of inorganic nanoparticles is typically no greater than about 80 wt%, no greater than 85 wt%, no greater than 90 wt%, or no greater than 95 wt%. The concentration of inorganic nanoparticles can be determined by methods known in the art, such as thermogravimetric analysis. In some embodiments, the dried low refractive index stack, high refractive index stack, or totality of self-assembled polymer-nanoparticle layers comprises at least 50 wt%, at least 55 wt%, at least 60 wt%, at least 65 wt%, or at least 70 wt% of inorganic nanoparticles.

The thickness of a bi-layer and the number of bi-layers are selected to achieve the desired (e.g., optical, barrier, or protection) properties, typically using the minimum total thickness of self-assembled layers and/or the minimum number of layer-by-layer deposition steps. In some embodiments, the thickness of a bi-layer, the number of bi-layers per stack, the number of stacks, and the thickness of each stack are selected to achieve the desired optical properties using the minimum total thickness of self-assembled layers and/or the minimum number of layer-by-layer deposition steps. The thickness of each bi-layer typically ranges from about 1 nm to 100 nm. The number of bi-layers per stack typically ranges from about 1 to 200. In some embodiments, the number of bi-layers per stack is at least 2, at least 5, at least 10, at least 20, or at least 30. The number of stacks is typically at least 1, at least 2, at least 3, or at least 4; and up to 20, up to 19, up to 18, up to 17, or up to 15. The thickness of a stack is typically at least 15 nm, 25 nm, 35 nm, 45 nm, 55 nm, 65 nm, 75 nm, or 85 nm and up to 5 micrometers ($\mu$m), up to 6 $\mu$m, up to 7 $\mu$m, up to 8 $\mu$m, up to 9 $\mu$m, or up to 10 $\mu$m. In some embodiments, the thickness of a stack is up to 500 nm, up to 400 nm, up to 300 nm, up to 250 nm, up to 200 nm, or up to 150 nm. In other embodiments, the number of bi-layers is selected to achieve the desired transmission in combination with mechanical durability. In this embodiment, the thickness of a bi-layer and number of bi-layers may approach the maximum values. Further, this embodiment may utilize a single stack of low or high refractive index that may be index matched to the substrate or coating to which it is applied.

The plurality of layers deposited by layer-by-layer self-assembly may provide a durable (e.g., index matched) top coat (e.g., hardcoat), a barrier layer, antireflection, or reflectivity of certain bandwidths of electromagnetic radiation.

The substrate **550** is typically a (e.g., non-porous) plate or continuous film having a thickness of at least 20 $\mu$m, at least 30 $\mu$m, at least 40 $\mu$m, or at least 50 $\mu$m; and up to 1 centimeter (cm), up to 2 cm, up to 3 cm, up to 4 cm, or up to 5 cm. In more typical embodiments, the thickness of the substrate is no greater than 30 mm, 20 mm, or 10 mm. Further, thinner substrates may be employed for embodiments wherein the substrate is reinforced by a carrier such as a removable release liner.

In some embodiments, the substrate **550** is an inorganic substrate, such as glass. In other embodiments, the substrate **550** is an organic material. In some favored embodiments, the substrate **550** comprises an organic material, such as an organic polymeric film. Suitable organic (e.g., film) polymeric materials include homopolymers, copolymers, blends, multilayer films, and multilayer laminates of any polymeric materials including for example polyester (e.g., polyethylene terephthalate, polybutylene terephthalate, and polyethylene napthalate), polycarbonate, allyldiglycol carbonate, acrylics (e.g., polymethylmethacrylate (PMMA)), polystyrene, polysulfone, polyether sulfone, homo-epoxy polymers, epoxy addition polymers with polydiamines and/or polydithiols, polyamides (e.g., nylon 6 and nylon 6,6), polyimides, polyolefins (e.g., polyethylene and polypropylene), olefinic copolymers (e.g., polyethylene copolymers), polyurethanes, polyureas, cellulose esters (e.g., cellulose acetate, cellulose triacetate, and cellulose butyrate), fluoropolymers, and combinations thereof.

Another example of a substrate comprising an organic material is depicted in **Fig. 2.** In this embodiment, the substrate **551** may comprise an organic material or may consist of an inorganic material, such as glass or metal. The substrate **551** further comprises an organic polymeric coating **560.** In this embodiment, the plurality of layers deposited by layer-by-layer self-assembly **510** are disposed onto the polymeric coating **560.** The polymeric coating **560** typically has a thickness of at least 5 or 10 $\mu$m and may range up to 100 $\mu$m.

Inorganic substrates include for example insulators/dielectrics, semiconductors, or conductors. Inorganic substrates (e.g., dielectrics) can be amorphous or crystalline and include, for example, glass (e.g., float glass, soda lime glass, borosilicate glass), quartz, fused quartz, sapphire, yttria, and other transparent ceramics. Inorganic substrates (e.g., semiconductors) include for example silicon, germanium, Group III/Group V semiconductors (e.g., gallium arsenide) Group II/VI semiconductors, Group IV/VI semiconductors, or Group IV semiconductors (e.g., silicon carbide). Inorganic substrates (e.g., conductors) include for example transparent conductive oxides (TCOs) such as indium-doped tin oxide (ITO), fluorine-doped tin oxide (FTO), and aluminum-doped zinc oxide (AZO) or metals such as gold, silver, aluminum, copper, iron, or alloys such as stainless steel.

The polymeric coating **560** can comprise any of the previously described organic polymeric materials. The polymeric coating can be aqueous-based, solvent-based, or a radiation curable (e.g., 100% solids) coating comprising a polymerizable resin. The polymerizable resin may comprises various (meth)acryl monomer and/or oligomers. The polymeric coating can comprise conducting polymers (e.g., polyaniline or poly(3,4 ethylenedioxythiophene): poly(styrene sulfonate)). The polymeric coating could also be filled with nano- or microparticles of inorganic material (e.g., inorganic oxides such as nanosilica, clay, etc.). The polymeric coating can be, for example, a protective coating, a structural coating, a hardcoat, an anti-reflection coating, or a selectively reflective coating (e.g., visible reflector, UV reflector, IR reflector, or combination thereof).

The layer-by-layer self-assembled polymer-inorganic oxide nanoparticle layers can provide a durable protective topcoat for a substrate. In this embodiment, the layer-by-layer self-assembled stack may comprise a low or high refractive index stack, index matched to the substrate or coated surface thereof. Layer-by-layer self-assembled coatings with improved mechanical strength and wear resistance have been taught in US 8,277,899 (Krogman et al.) and WO 2012/112624 (Olmeijer et al.).

In some embodiments, the selection of the inorganic materials will depend upon the reflection bandwidth of interest. For example, the plurality of layers deposited by layer-by-layer self-assembly can be a ¼ wave stack wherein control of the spectrum is achieved by controlling the thickness of the high and low refractive index stacks by altering the number of deposited bi-layers and/or altering the conditions during the layer-by-layer self-assembly process such as the pH and ionic strength of the liquid (e.g., bath) solutions. It is appreciated that the plurality of layers deposited by layer-by-layer self-assembly typically does not utilize birefringence for creating a refractive index difference between the low refractive and high refractive index stacks.

In some embodiments, the plurality of layers deposited by layer-by-layer self-assembly is light transmissive to visible light (400 to 700 nm), typically exhibiting e.g., at least 85% or at least 90% transmission for polymer-polymer layers and at least 70% or at least 75% for polymer-inorganic oxide nanoparticle layers. In some embodiments, the substrate is an inorganic or organic polymeric material that is light transmissive to visible light (400 nm to 700 nm), typically exhibiting .e.g., at least 85% or at least 90% transmission.

In one embodiment, the layer-by-layer self-assembled polymer-inorganic oxide nanoparticle layers can provide an antireflective coating for the substrate. The inclusion of the layer-by-layer self-assembled layers can reduce the surface reflections and thus increase transmission by 1%, 2%, 3%, 4%, or 5%.

The physical principles of antireflection (AR) films and coatings are known. AR films are often constructed of alternating high and low refractive index (RI) polymer layers of the correct optical thickness. With regards to visible light, this thickness is on the order of one-quarter of the wavelength of the light to be reflected. The human eye is most sensitive to light around 550 nm. Therefore it is desirable to design the low and high index coating thicknesses in a manner that minimizes the amount of reflected light in this optical range (e.g., 3%, 2%, 1%, or lower). In some embodiments, the inclusion of the antireflective coating described herein reduces the average % reflection for 400 nm to 700 nm by at least 1%, at least 2%, at least 3%, or at least 4%. Further the percent reflection at 550 nm may be reduced by at least 1%, at least 2%, at least 3%, or at least 4% as compared to the same substrate lacking the antireflective layer-by-layer coating. An antireflective coating can be created by coating $SiO_2$ containing bi-layers at an optical thickness of ¼ wave. In other embodiments, the antireflective coating comprises at least one low refractive index bi-layer stack and at least one high refractive index bi-layer stack.

In some embodiments, the layer-by-layer self-assembled polymer-inorganic oxide nanoparticle layers may be selected to reflect a desired bandwidth. The plurality of layers deposited by layer-by-layer self-assembly may function as a UV mirror, blue mirror, visible mirror, near infrared mirror, or combination thereof. Such self-assembled layers can be one-quarter wave stacks or non-quarter wave stacks such as described in US2010/0290109 (Kurt et al.).

With respect to **Fig. 4,** in one embodiment, the present invention concerns multilayer optical film (MOF) substrates, wherein a plurality of layers **110** deposited by layer-by-layer self-assembly is disposed on a multilayer optical film **130** and at least a portion of the layers comprise an organic light absorbing compound or organic light stabilizing compound dispersed within a polyelectrolyte. In some embodiments, the plurality of layers **110** deposited by layer-by-layer self-assembly forms a major surface layer that is exposed to the environment.

Multilayer optical films include a film having two or more layers. Multilayer optical films are useful, for example, as highly efficient mirrors and/or polarizers.

Various multilayer optical films are known. Multilayer optical films generally comprise alternating polymeric layers of at least one birefringent polymer (e.g., oriented semi-crystalline polymer) and one second polymer, the layers selected to achieve the reflection of a specific bandwidth of electromagnetic radiation.

**Fig. 4A** shows a multilayer polymer film **130** that may be used, for example, as an optical polarizer or mirror. The film **16** includes one or more first optical layers **12,** one or more second optical layers **14,** and optionally one or more (e.g., non-optical) additional layers **18. Fig. 4A** includes a multilayer stack having alternating layers **12, 14** of at least two materials. In one embodiment, the materials of layers **12** and **14** are polymeric. An in-plane index of refraction $n_1$ in one in-plane direction of high refractive index layer **12** is higher than the in-plane index of refraction $n_2$ of the low refractive index layer **14** in the same in-plane direction. The difference in refractive index at each boundary between the layers **12, 14** causes part of the incident light to be reflected. The transmission and reflection characteristics of the multilayer film **16** is based on coherent interference of light caused by the refractive index difference between the layers **12**, **14** and the thicknesses of the layers **12, 14.** When the effective indices of refraction (or in-plane indices of refraction for normal incidence) differ between the layers **12, 14,** the interface between the adjacent layers **12, 14** forms a reflecting surface. The reflective power of the reflecting surface depends on the square of the difference between the effective indices of refraction of the layers **12, 14** (i.e., $(n_1 - n_2)^2$). By increasing the difference in the indices of refraction between the layers **12, 14,** improved optical power (higher reflectivity), thinner films (thinner or fewer layers), and broader bandwidth performance can be achieved. The refractive index difference in one in-plane direction in an exemplary embodiment is at least about 0.05, preferably greater than about 0.10, more preferably greater than about 0.15 and even more preferably greater than about 0.20.

In one embodiment, the materials of the layers **12, 14** inherently have differing indices of refraction. In another embodiment, at least one of the materials of the layers **12, 14** has the property of stress induced birefringence, such that the index of refraction (n) of the material is affected by the stretching process. By stretching the multilayer film **16** over a range of uniaxial to biaxial orientations, films can be created with a range of reflectivities for differently oriented plane polarized incident light.

The number of layers is typically at least 10, at least 25, at least 50 or at least 100. In favored embodiments, the number of layers in the multilayer film **16** is selected to achieve the desired optical properties using the minimum number of layers for reasons of film thickness, flexibility and economy. In the case of reflective films such as polarizers and mirrors, the number of layers is preferably less than about 2,000, more preferably less than about 1,000, and even more preferably less than about 750. In some embodiments, the number of layer is at least 150 or 200. In other embodiments, the number of layers is at least 250.

In some embodiments, the multilayer polymer film further comprises optional additional non-optical or optical layers. The additional layers **18** are polymer layers that are disposed within the film **16.** Such additional layers may protect the optical layers **12, 14** from damage, aid in the co-extrusion processing, and/or to enhance post-processing mechanical properties. The additional layers **18** are often thicker than the optical layers **12, 14.** The thickness of the additional (e.g., skin) layers **18** is usually at least two times, preferably at least four times, and more preferably at least ten times, the thickness of the individual optical layers **12, 14.** The thickness of the additional layers **18** may be varied to make a multilayer polymer film **16** having a particular thickness. A tie layer (not shown) may be present between the non-optical skin layer and the optical layers. Further, a top coat (also not shown) may be disposed upon the skin layer. Typically, one or more of the additional layers **18** are placed so that at least a portion of the light to be transmitted, polarized, and/or reflected by the optical layers **12, 14,** also travels through the additional layers (i.e., the additional layers are placed in the path of light which travels through or is reflected by the optical layers **12, 14).**

One embodiment of the multilayer film **16** comprises multiple low/high index pairs of film layers, wherein each low/high index pair of layers has a combined optical thickness of 1/2 the center wavelength of the band it is designed to reflect. Stacks of such films are commonly referred to as quarterwave stacks. For multilayer optical films concerned with the visible and the near infrared wavelengths, a quarterwave stack design results in each of the layers **12, 14** in the multilayer stack having an average thickness of not more than about 0.5 micrometers. In other exemplary embodiments, different low/high index pairs of layers may have different combined optical thicknesses, such as where a broadband reflective optical film is desired.

Asymmetric reflective films (such as films resulting from unbalanced biaxial stretching) may be desirable for certain applications. In that case, average transmission along one stretch direction may be desirably less than, for example, about 50 percent, while the average transmission along the other stretch direction may be desirably less than, for example, about 20 percent, over a bandwidth of, for example, the visible spectrum (about 380 nm to 750 nm), or over the visible spectrum and into the near infrared (e.g., about 380 nm to 850 nm).

Multilayer optical films can also be designed to operate as reflective polarizers. One way to produce a multilayer reflective polarizer is to uniaxially stretch a multilayer stack. The resulting reflective polarizers have high reflectivity for light with its plane of polarization parallel to a first in-plane axis (usually, in the stretch direction) for a broad range of angles of incidence, and simultaneously have low reflectivity and high transmissivity for light with its plane of polarization parallel to a second in-plane axis that is orthogonal to the first in-plane axis (usually, in the non-stretch direction) for a

broad range of angles of incidence. By controlling the three indices of refraction of each film, $n_x$, $n_y$ and $n_z$, the desired polarizer behavior can be obtained. See, for example, U.S. Patent No. 5,882,774 (Jonza et al.).

The first optical layer(s) are prepared from a birefringent polymer having an in-plane birefringence (the absolute value of $n_x$-$n_y$) after orientation of at least 0.10 and preferably at least 0.15. In some embodiments the birefringence of the first optical layer is 0.20 or greater. The refractive index of the polyester for 632.8 nm light polarized in a plane parallel to the stretch direction can increase from about 1.62 to as high as about 1.87. For other types of multilayer optical films, such as those utilized as a mirror film, the out-of-plane birefringence properties are of importance. In some embodiments, the average out-of-plane birefringence is at least 0.10, at least 0.15 or at least 0.20.

The optical layers **12, 14** and the optional additional layers **18** of the multilayer polymer film **16** are typically composed of polymers such as polyesters. Polyesters include carboxylate and glycol subunits and are generated by reactions of carboxylate monomer molecules with glycol monomer molecules. Each carboxylate monomer molecule has two or more carboxylic acid or ester functional groups and each glycol monomer molecule has two or more hydroxy functional groups. The carboxylate monomer molecules may all be the same or there may be two or more different types of molecules. The same applies to the glycol monomer molecules. The properties of a polymer layer or film vary with the particular choice of monomer molecules of the polyester.

Various suitable polyester polymers have been described in the art, some of which are described in WO 2014/099367 (Schmidt et al.). An exemplary polymer useful as the birefringent layer in the multilayer optical films of the present invention is polyethylene naphthalate (PEN), which can be made, for example, by reaction of naphthalene dicarboxylic acid with ethylene glycol. Polyethylene 2,6-naphthalate (PEN) is frequently chosen as a birefringent polymer. PEN has a large positive stress optical coefficient, retains birefringence effectively after stretching, and has little or no absorbance within the visible range. PEN also has a large index of refraction in the isotropic state. Its refractive index for polarized incident light of 550 nm wavelength increases when the plane of polarization is parallel to the stretch direction from about 1.64 to as high as about 1.9. Increasing molecular orientation increases the birefringence of PEN. The molecular orientation may be increased by stretching the material to greater stretch ratios and holding other stretching conditions fixed. Copolymers of PEN (CoPEN), such as those described in U.S. Pat. No. 6,352,761 (Hebrink et al.) and U.S. Pat. No. 6,449,093 (Hebrink et al.) are particularly useful for their low temperature processing capability making them more coextrusion compatible with less thermally stable second polymers. Other semicrystalline polyesters suitable as birefringent polymers include, for example, polybutylene 2,6-naphthalate (PBN), polyethylene terephthalate (PET), and copolymers thereof such as those described in U.S. Pat. No. 6,449,093 B2 (Hebrink et al.) or U.S. Pat. App. No. 2006/0084780 (Hebrink et al.). Alternatively, syndiotactic polystyrene (sPS) is another useful birefringent polymer.

The second polymer of the multilayer optical film can be made from a variety of polymers having glass transition temperatures compatible with that of the first birefringent polymer and having a refractive index similar to the isotropic refractive index of the birefringent polymer. Examples of other polymers suitable for use in optical films and, particularly, in the second polymer include vinyl polymers and copolymers made from monomers such as vinyl naphthalenes, styrene, maleic anhydride, acrylates, and methacrylates. Examples of such polymers include polyacrylates, polymethacrylates, such as poly (methyl methacrylate) (PMMA), and isotactic or syndiotactic polystyrene. Other polymers include condensation polymers such as polysulfones, polyamides, polyurethanes, polyamic acids, and polyimides. In addition, the second polymer can be formed from homopolymers and copolymers of polyesters, polycarbonates, fluoropolymers, and polydimethylsiloxanes, and blends thereof.

In some favored embodiments, the multilayer optical film comprises or consists of quarterwave film stacks. In this case, control of the spectrum requires control of the layer thickness profile in the film stack. A broadband spectrum, such as one required to reflect visible light over a large range of angles in air, still requires a large number of layers if the layers are polymeric, due to the relatively small index differences achievable with polymer films compared to inorganic films. Layer thickness profiles of such films can be adjusted to provide for improved spectral characteristics using the axial rod apparatus taught in US Patent 6,783,349 (Neavin et al.); combined with layer profile information obtained with microscopic techniques.

The multilayer optical film can be an ultraviolet reflector, a blue reflector, a visible reflector, or an infared reflector, as further described in WO 2014/099367 (Schmidt et al.).

In some embodiments, the multilayer optical film can be characterized as a UV reflective multilayer optical film (i.e., a UV reflector or UV mirror). A UV reflective multilayer optical film refers to a film having a reflectivity at normal incidence of at least 50%, at least 60%, at least 70%, at least 80%, or at least 90% for a bandwidth ranging from 290 nm to 400 nm. In some embodiments, the reflectivity at normal incidence for a bandwidth ranging from 290 nm to 400 nm is at least 91%, at least 92%, at least 93%, at least 94%, at least 95%, at least 96%, at least 97%, or at least 98%. A UV reflective multilayer optical film can have low reflectivity and high transmission for visible light. For example the transmission of visible light can be at least 85% or at least 90%.

In some embodiments, the multilayer optical film can be characterized as a UV-blue reflective multilayer optical film (i.e., a UV-blue reflector or UV-blue mirror). A UV-blue reflective multilayer optical film refers to a film having a reflectivity at normal incidence of at least 50%, at least 60%, at least 70%, at least 80%, or at least 90% for a bandwidth

ranging from 350 nm to 490 nm. In some embodiments, the reflectivity at normal incidence for a bandwidth ranging from 350 nm to 490 nm is at least 91%, at least 92%, at least 93%, at least 94%, at least 95%, at least 96%, or at least 97%. The UV-blue reflective multilayer optical film can have low reflectivity and high transmission for visible light having wavelength greater than 500 nm. For example the transmission of visible light having wavelength greater than 500 nm can be at least 85% or at least 90%.

In some embodiments, the multilayer optical film can be characterized as a near infrared reflective multilayer optical film (i.e., near infrared reflector or near infrared mirror). A near infrared reflective multilayer optical film refers to a film having a reflectivity at normal incidence of at least 50%, at least 60%, at least 70%, at least 80 %, or at least 90% for a bandwidth ranging from 870 nm to 1100 nm. In some embodiments, the reflectivity at normal incidence for a bandwidth ranging from 870 nm to 1100 nm is at least 91%, at least 92%, at least 93%, or at least 94%. In some embodiments, the film exhibits this same near infrared reflectivity at a 45 degree angle. The near infrared reflective multilayer optical film can have low reflectivity and high transmission for visible light. For example, the transmission of visible light can be at least 85%, at least 86%, at least 87% or at least 88%.

A visible light reflective multilayer optical film (e.g., visible reflector or visible mirror) refers to a film having a reflectivity at normal incidence of at least 50%, at least 60%, at least 70%, at least 80%, or at least 90% for a bandwidth ranging from 400 nm to 700 nm. In some embodiments, the reflectivity at normal incidence for a bandwidth ranging from 400 nm to 700 nm is at least 91%, at least 92%, at least 93%, at least 94%, at least 95%, at least 96%, at least 97%, or at least 98%. The near infrared reflectivity properties of such broadband reflector are as previously described.

In other embodiments, a single multilayer optical film can reflect more than one bandwidth and may be considered a broadband reflector. For example, the multilayer optical film may be a visible and near infrared reflective multilayer optical film. Thus, such multilayer optical film has high reflectivity of both visible and near infrared bandwidths.

Additionally, two or more multilayer optical film mirrors, e.g., with different reflection bands, laminated together to broaden the reflection band. For example, a multilayer optical film visible reflector, such as previously described, can be combined with a UV, a UV-blue, and/or near infrared reflector. Various other combinations can be made as appreciated by one of ordinary skill in the art.

In some embodiments, the plurality of layers deposited by layer-by-layer self-assembly reflects at least a portion of the same bandwidth of electromagnetic radiation as the multilayer optical film. For example the plurality of layers deposited by layer-by-layer self-assembly can increase the average reflectivity (e.g., for visible light) from about 10% to 20%, to 30%, or to 35%.

In other embodiments, the plurality of layers deposited by layer-by-layer self-assembly reflects at least a portion of a different bandwidth of electromagnetic radiation than the multilayer optical film. For example, the inclusion of the plurality of layers deposited by layer-by-layer self-assembly can increase the average reflectivity (e.g., for UV light) from about 35% to 40%, to 45%, or to 50%. In yet another embodiment, the inclusion of the plurality of layers deposited by layer-by-layer self-assembly can increase the average reflectivity (e.g., for 290 nm to 400 nm) from about 15% to 30%, to 35%, to 40%, or to 45%.

The (e.g., MOF) substrate may optionally include a (e.g., durable) protective top coat as one type of organic polymeric coating that can further contribute to preventing premature degradation due to exposure to light. It is appreciated that the layer that was formerly the "top coat" of the substrate becomes an intermediate layer after the plurality of self-assembled layers are disposed upon the substrate.

The (e.g., durable) protective topcoat, also referred to as a hardcoat, can be abrasion and impact resistant and does not interfere with the primary function of reflecting a selected bandwidth of electromagnetic radiation. Top coat layers may include one or more of the following nonlimiting examples: PMMA/PVDF blends, thermoplastic polyurethanes, curable polyurethanes, CoPET, cyclic olefin copolymers (COC's), fluoropolymers and their copolymers such as polyvinylidene fluoride (PVDF), ethylene tetrafluoroethyelene (ETFE), fluorinated ethylene propylene (FEP), and copolymers of tetrafluoroethylene, hexafluoropropylene, and vinylidene fluoride (THV), thermoplastic and curable acrylates, cross-linked acrylates, cross-linked urethane acrylates, cross-linked urethanes, curable or cross-linked polyepoxides, and silicone polyoxamide. Strippable polypropylene copolymer skins may also be employed. Alternatively, silane silica sol copolymer hard coating can be applied as a durable top coat to improve scratch resistance.

The thickness of the top coat is dependent upon an optical density target at specific wavelengths as calculated by Beer's Law. In some embodiments, the top coat has an optical density greater than 3.5 at 380 nm; greater than 1.7 at 390; and greater than 0.5 at 400 nm. Typical protective layer thicknesses are from 0.5 mils (12.7 $\mu$m) to 15 mils (381 $\mu$m).

The top coat can also comprise various (polymerizable or unpolymerizable) additives such as light absorbers (UVA) that comprise a benzotriazole, benzophenone, or triazine group, hindered amine light stabilizers (HALS) and combinations thereof in amounts ranging from about 2-10%. Such UVA absorbers are the same classes of compounds previously described except that the inclusion of a (meth)acryl or vinyl group is optional.

The top coat can comprise inorganic oxide nanoparticles, such as non-pigment zinc oxide and titanium oxide, as light blocking or scattering additives. For example, nano-scale particles can be dispersed in polymer or coating substrates to minimize UV radiation degradation. The nano-scale particles are transparent to visible light while either

scattering or absorbing harmful UV radiation thereby reducing damage to thermoplastics. The concentration of such inorganic oxide nanoparticles is typically less than 5 wt.-%, less than 4 wt.-%, less than 3 wt.-%, less than 2 wt.-%, or less than 1 wt.-%.

It is within the scope of the present disclosure to include UV protective topcoats on both major surfaces of a (e.g., MOF) substrate. In some embodiments, it may be desirable to have a UV protective topcoat only between the substrate and the plurality of layers deposited by layer-by-layer self-assembly or only on the opposite surface as the plurality of layers deposited by layer-by-layer self-assembly.

Optional UV protective hardcoats can be provided by techniques known in the art, including those described in U.S. Pat. No 7,153,588 (McMan et al.) and WO2013/142239 (Clear et al.). Additional hard coats include silica filled siloxanes available, for example, from California Hard Coat (San Diego, CA) under the trade designation "PERMANEW", and from Momentive Performance Materials (Albany, NY) under the trade designations "AS4000", "AS4700", and "UVHC-3000". Exemplary acrylic UV protective hardcoats are available, for example, under the trade designations "UVT610(GEN IV)" and "UVT200" from Red Spot Paint & Varnish Company (Evansville, IN). Exemplary UV protective acrylic hard coats are disclosed, for example, in WO 2013/142239 (Clear et al.). Use of hardcoats can, for example, reduce or prevent premature degradation of the article due to exposure to outdoor elements. The hardcoat is generally abrasion and impact resistant and does not interfere with the primary function of reflecting a selected bandwidth of electromagnetic radiation.

However, since the plurality of layer-by-layer self-assembled layers can minimize UV radiation degradation by reflecting UV radiation, in some embodiments, the substrate (inclusive of the optional layer(s)) is free of inorganic oxide particles and may also be free of organic light absorbing or light stabilizing compounds in the organic coating layer (e.g., topcoat when present).

In some embodiments, the substrates and articles are suitable for outdoor usage or other uses wherein the substrate is subject to high levels of exposure to solar radiation. For example, in one embodiment, the substrate may be a light transmissive cover of a light bulb.

In other embodiments, the substrate is an optical film having high transmission of visible light such as a cover (glass or organic) polymeric substrate for an optical display, a (e.g., reflective) polarizing film or a brightness enhancing film suitable for use in various liquid crystal displays (LCD) and light-emitting diode displays (LEDs).

Films having a high transmission of visible light including UV, IR and visible mirrors may also be used in architectural applications, greenhouse applications, window films, paint protection films, solar power applications, lighting, fenestration products (i.e., products that fill openings in a building, such as windows, doors, skylights, or curtain walls, e.g., that are designed to permit the passage of light), solar light tube products and other daylighting systems for transporting sunlight to interior rooms, and other applications.

In other embodiments, the substrates described herein may be used in commercial graphics films (e.g., films for billboards, building exteriors, signage, automobiles, mass transit vehicles, etc.), traffic signage, and protection films such as car wrap films.

In some favored embodiments, the multilayer optical film of the present disclosure is utilized as a broadband reflector for solar concentrators of solar cells of solar power systems.

In a fifth aspect, a dielectric mirror is provided. The dielectric mirror comprises:

a substrate;
a first stack of bi-layers disposed on the substrate; and
a second stack of bi-layers positioned in planar contact with the first stack. The second stack of bi-layers exhibits a refractive index of less than 1.5. Each bi-layer in the first stack of bi-layers comprises surface-modified inorganic oxide nanoparticles functionalized with an alpha-hydroxy acid or salt thereof, wherein the alpha-hydroxy acid or salt is of Formula I:

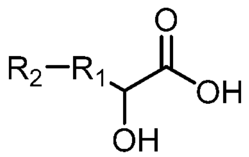 I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

Dielectric mirrors can also be referred to as dichroic mirrors, Bragg reflectors, 1-D photonic crystals, or visible

light reflectors (VLRs, i.e., when tuned to partially transmit and partially reflect light in the visible spectrum (400-700 nm)), which are each generally understood to those of skill in the art to at least partially reflect light within a desired band of wavelengths by employing alternating high and low refractive index layers. Dielectric mirrors of the present disclosure are at least partially reflective and at least partially transparent, such that underlying layers can be visible via the dielectric mirror. The term dielectric is used to refer to non-metallic and non-electrically conducting materials.

**Fig. 5** is a cross sectional schematic depicting an exposed lens retroreflective article **1000** comprising a reflective layer **1100** including the inventive article in the form of a dielectric mirror comprising a polyelectrolyte. The microspheres **1080** and the reflective layer **1100** return a substantial quantity of incident light towards the light source. Light that strikes the retroreflective article's front, or front surface, **1200** passes through the microspheres **1080** and is reflected by the reflective layer **1100** to again reenter the microspheres **1080,** where the light's direction is then altered to return toward the light source. The reflective layer **1100** can generally be very thin relative to the binder layer **1140.** As shown, the retroreflective article **1000** can further include at least one of a substrate (e.g., a fabric) and an adhesive **1300** coupled to a back (or rear) surface of the binder layer **1140** to facilitate coupling the retroreflective article **1000** to other substrates or materials.

The reflective layer **1100,** and particularly, the dielectric mirror, is illustrated in **Fig. 5** as having two layers for simplicity to represent a low refractive index (RI) stack **1150** and a high refractive index (RI) stack **1110.** Each stack can be characterized by way of example only as a high or low RI layer comprising a plurality of polymer-inorganic oxide bilayers.

Dielectric mirrors are generally multi-layer constructions. As shown, the reflective layer **1100** is in the form of a dielectric mirror comprising a plurality of layers deposited, e.g., by layer-by-layer self-assembly. The dielectric mirror can include alternating stacks of optical thin films with different refractive indexes (RIs) - e.g., a "high" RI and a "low" RI. The interfaces between stacks with different RIs produce phased reflections, selectively reinforcing certain wavelengths (constructive interference) and cancelling other wavelengths (destructive interference). By selecting certain variables such as stack thickness, refractive indices, and number of the stacks, as explained in more detail below, the band(s) of reflected and/or transmitted wavelengths can be tuned and made as wide or as narrow as desired.

In some embodiments, the second stack of bi-layer comprises exhibits a refractive index of less than 1.45, less than 1.40, less than 1.35, less than 1.30, or less than 1.25. Moreover, in certain embodiments, the first stack of bi-layers exhibits a refractive index greater than the refractive index exhibited by the second stack of bi-layers by at least 0.30, at least 0.35, at least 0.40, at least 0.45, or at least 0.50. For instance, in select embodiments, each bi-layer in the second stack of bi-layers comprises silica nanoparticles. Each bi-layer in the first stack of bi-layers optionally further comprises a polycationic polymer or inorganic oxide nanoparticles.

The arrangement of the stacks of bi-layers in the dielectric mirror can include where the first stack of bi-layers is disposed between the substrate and the second stack of bi-layers or where the second stack of bi-layers is disposed between the substrate and the first stack of bi-layers.

In a sixth embodiment, an exposed lens retroreflective article is provided. The exposed lens retroreflective article includes a binder layer; a layer of transparent microspheres partially embedded in the binder layer; and a reflective layer disposed between the binder layer and the microspheres. The reflective layer includes a dielectric mirror according to the fifth aspect above.

Various embodiments are provided including compositions, articles, and methods.

Embodiment 1 is a composition. The composition includes water; a base; and surface-modified inorganic oxide nanoparticles dispersed in the water, the surface-modified inorganic oxide nanoparticles functionalized with an alpha-hydroxy acid or salt thereof. The alpha-hydroxy acid or salt is of Formula I:

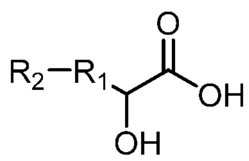

I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

Embodiment 2 is the composition of embodiment 1, wherein $R_1$ is a polyalcohol and $R_2$ is H.

Embodiment 3 is the composition of embodiment 1, wherein $R_1$ includes a linear or branched alkyl group and $R_2$ includes a carboxylic acid group.

Embodiment 4 is the composition of embodiment 1 or embodiment 3, wherein the surface-modified inorganic oxide nanoparticles are functionalized with citric acid.

Embodiment 5 is the composition of any of embodiments 1 to 4, wherein the surface-modified inorganic oxide nanoparticles are present in an amount from 0.01 weight percent to 50 weight percent of the total composition, inclusive.

Embodiment 6 is the composition of any of embodiments 1 to 5, wherein the composition has a pH of at least 4.0, at least 6.0, at least 8.0, or at least 10.0.

Embodiment 7 is the composition of any of embodiments 1 to 6, wherein the base includes an alkaline hydroxide, an alkaline earth hydroxide, a quaternary ammonium hydroxide, an alkaline carbonate, an alkaline earth carbonate, an alkaline bicarbonate, an alkaline earth bicarbonate, an alkaline oxide, an alkaline earth oxide, or combinations thereof.

Embodiment 8 is the composition of any of embodiments 1 to 7, wherein the surface-modified inorganic oxide nanoparticles include zirconia nanoparticles.

Embodiment 9 is a method of making a composition. The method includes dispersing surface-modified inorganic oxide nanoparticles in an aqueous solvent; and adjusting the pH of the dispersion to at least 4.0 with a base. The surface-modified inorganic oxide nanoparticles are functionalized with an alpha-hydroxy acid or salt thereof, wherein the alpha-hydroxy acid or salt is of Formula I:

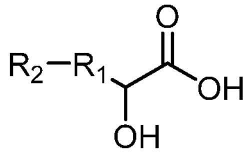
I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

Embodiment 10 is the method of embodiment 9, wherein the surface-modified inorganic oxide nanoparticles are prepared by reacting inorganic oxide nanoparticles in an aqueous sol with the alpha-hydroxy acid or salt thereof.

Embodiment 11 is the method of embodiment 9 or embodiment 10, wherein the pH is adjusted to at least 6.0, at least 8.0, or at least 10.0.

Embodiment 12 is the method of any of embodiments 9 to 11, wherein the base includes an alkaline hydroxide, an alkaline earth hydroxide, a quaternary ammonium hydroxide, an alkaline carbonate, an alkaline earth carbonate, an alkaline bicarbonate, an alkaline earth bicarbonate, an alkaline oxide, an alkaline earth oxide, or combinations thereof.

Embodiment 13 is the method of any of embodiments 9 to 12, wherein the surface-modified inorganic oxide nanoparticles are present in an amount from 0.01 weight percent to 50 weight percent of the total composition, inclusive.

Embodiment 14 is the method of any of embodiments 9 to 13, wherein $R_1$ is a polyalcohol and $R_2$ is H.

Embodiment 15 is the method of any of embodiments 9 to 13, wherein $R_1$ is a linear or branched alkyl group and $R_2$ includes a carboxylic acid group.

Embodiment 16 is the method of any of embodiments 9 to 13 or 15, wherein the surface-modified inorganic oxide nanoparticles are functionalized with citric acid.

Embodiment 17 is the method of any of claims 9 to 16, wherein the surface-modified inorganic oxide nanoparticles include zirconia nanoparticles.

Embodiment 18 is a method of making an article. The method includes obtaining a first composition including water; a base; and surface-modified inorganic oxide nanoparticles dispersed in the water; obtaining a second composition including a polycationic polymer or a dispersion of inorganic oxide nanoparticles; and disposing onto a substrate a plurality of layers by layer-by-layer self-assembly of the first composition and the second composition. The surface-modified inorganic oxide nanoparticles are functionalized with an alpha-hydroxy acid or salt thereof. The alpha-hydroxy acid or salt is of Formula I:

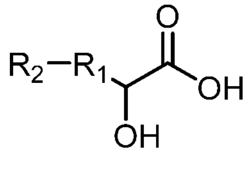
I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid

group, a sulfonic acid group, a hydroxamic acid, or a salt thereof.

Embodiment 19 is the method of embodiment 18, wherein the plurality of layers has a refractive index of at least 1.60, 1.62, 1.64, 1.66, 1.68, 1.70, 1.72, 1.74, or 1.76.

Embodiment 20 is the method of embodiment 18 or embodiment 19, wherein the first composition has a pH of at least 4.0, at least 6.0, at least 8.0, or at least 10.0.

Embodiment 21 is the method of any of embodiments 18 to 20, wherein the first composition and the second composition are each disposed onto the substrate to form at least 4 bi-layers.

Embodiment 22 is the method of any of embodiments 18 to 21, wherein the first composition and the second composition are each disposed onto the substrate to form at least 15 bi-layers.

Embodiment 23 is the method of any of embodiments 18 to 22, wherein the second composition includes poly(diallyl-dimethyl ammonium chloride), a polyallylamine, or a polyethylenimine as the polycationic polymer.

Embodiment 24 is the method of any of embodiments 18 to 22, wherein the second composition includes zirconia nanoparticles as the inorganic oxide nanoparticles.

Embodiment 25 is the method of any of embodiments 18 to 24, wherein the first composition contains excess alpha-hydroxy acid or salt when disposed on the substrate.

Embodiment 26 is an article including a substrate; and a plurality of layers comprising bi-layers. A portion of the layers comprise surface-modified inorganic oxide nanoparticles functionalized with an alpha-hydroxy acid or salt thereof, wherein the alpha-hydroxy acid or salt is of Formula I:

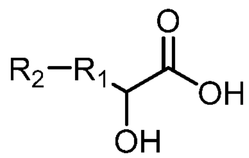
I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

Embodiment 27 is the article of embodiment 26, wherein a portion of the layers include a polycationic polymer or inorganic oxide nanoparticles.

Embodiment 28 is the article of embodiment 26 or embodiment 27, wherein the plurality of layers has a refractive index of at least 1.60, 1.62, 1.64, 1.66, 1.68, 1.70, 1.72, 1.74, or 1.76.

Embodiment 29 is the article of any of embodiments 26 to 28, wherein the substrate is a visible light transmissive inorganic or organic polymeric material.

Embodiment 30 is the article of any of embodiments 27 to 29, wherein the bi-layers include alternating first layers and second layers, wherein the first layers include the surface-modified inorganic oxide nanoparticles and the second layers include the polycationic polymer or inorganic oxide nanoparticles.

Embodiment 31 is the article of any of embodiments 26 to 30, wherein $R_1$ is a linear or branched alkyl group and $R_2$ includes a carboxylic acid group.

Embodiment 32 is the article of any of embodiments 26 to 31, wherein the surface-modified inorganic oxide nanoparticles are functionalized with citric acid.

Embodiment 33 is the article of any of embodiments 26 to 31, wherein $R_1$ is a polyalcohol and $R_2$ is H.

Embodiment 34 is the article of any of embodiments 26 to 33, including at least 4 bi-layers.

Embodiment 35 is the article of any of embodiments 26 to 34, including at least 15 bi-layers.

Embodiment 36 is the article of any of embodiments 27 to 35, including poly(diallyl-dimethyl ammonium chloride), a polyallylamine, or a polyethylenimine as the polycationic polymer.

Embodiment 37 is the article of any of embodiments 27 to 36, including zirconia nanoparticles as the inorganic oxide nanoparticles.

Embodiment 38 is the article of any of embodiments 26 to 37, wherein the surface-modified inorganic oxide nanoparticles include zirconia nanoparticles.

Embodiment 39 is a dielectric mirror. The dielectric mirror includes a substrate; a first stack of bi-layers disposed on the substrate; and a second stack of bi-layers positioned in planar contact with the first stack. The second stack of bi-layers exhibits a refractive index of less than 1.50. Each bi-layer in the first stack of bi-layers includes surface-modified inorganic oxide nanoparticles functionalized with an alpha-hydroxy acid or salt thereof, wherein the alpha-hydroxy acid or salt is of Formula I:

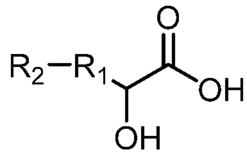 I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

Embodiment 40 is the dielectric mirror of embodiment 39, wherein the first stack of bi-layers exhibits a refractive index greater than the refractive index exhibited by the second stack of bi-layers by at least 0.30, or 0.35, or 0.40, or 0.45, or 0.50.

Embodiment 41 is the dielectric mirror of embodiment 39 or embodiment 40, wherein each bi-layer in the second stack of bi-layers includes silica nanoparticles.

Embodiment 42 is the dielectric mirror of any of embodiments 39 to 41, wherein each bi-layer in the first stack of bi-layers further includes a polycationic polymer or inorganic oxide nanoparticles.

Embodiment 43 is the dielectric mirror of any of embodiments 39 to 42, wherein the first stack of bi-layers is disposed between the substrate and the second stack of bi-layers.

Embodiment 44 is the dielectric mirror of any of embodiments 39 to 42, wherein the second stack of bi-layers is disposed between the substrate and the first stack of bi-layers.

Embodiment 45 is the dielectric mirror of any of embodiments 39 to 44, wherein the second stack of bi-layer exhibits a refractive index of less than 1.45, or 1.40, or 1.35, or 1.30, or 1.25.

Embodiment 46 is an exposed lens retroreflective article. The exposed lens retroreflective article includes a binder layer; a layer of transparent microspheres partially embedded in the binder layer; and a reflective layer disposed between the binder layer and the microspheres. The reflective layer includes a dielectric mirror. The dielectric mirror includes a substrate; a first stack of bi-layers disposed on the substrate; and a second stack of bi-layers positioned in planar contact with the first stack. The second stack of bi-layers exhibits a refractive index of less than 1.50. Each bi-layer in the first stack of bi-layers includes surface-modified inorganic oxide nanoparticles functionalized with an alpha-hydroxy acid or salt thereof, wherein the alpha-hydroxy acid or salt is of Formula I:

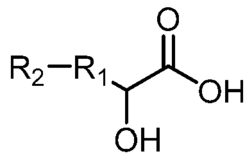 I;

wherein $R_1$ is selected from a polyether or a polyalcohol; and $R_2$ is selected from a linear or branched alkyl, aryl, alkylene, or arylene group; a hydroxyl group; or H; or wherein $R_1$ is selected from a linear or branched alkyl, aryl, alkylene, or arylene group; or a covalent bond; and $R_2$ is selected from a carboxylic acid group, a sulfuric acid group, a sulfinic acid group, a sulfonic acid group, a hydroxamic acid, or a salt thereof.

Advantages and embodiments of this disclosure are further illustrated by the following examples, but the particular materials and amounts thereof recited in these examples, as well as other conditions and details, should not be construed to unduly limit this disclosure. All materials are commercially available or known to those skilled in the art unless otherwise stated or apparent.

## Examples

### Materials

Unless otherwise noted, all parts, percentages, ratios, etc., in the examples and in the remainder of the specification are by weight. Unless otherwise noted, all chemicals were obtained from, or are available from, chemical suppliers such as Sigma-Aldrich Co., St. Louis, Missouri.

The following is a list of materials used throughout the Examples, as well as their brief descriptions and origins.

Soda-lime float glass plates (2" x 2"x 1/8" thick and 12" x 12" x 1/8" thick) were procured from the Brin Northwestern Glass Company (Minneapolis, MN), then cut to size by the 3M glass blowing shop.

Spectrapor 7 dialysis membranes (molecular weight cutoff (MWCO) of 3500 g/mol) were purchased from Spectrum Labs, Inc. (Rancho Dominguez, California).

Citric acid was obtained from Alfa Aesar (Ward Hill, MA).

Trisodium citrate, dihydrate was obtained from Alfa Aesar (Ward Hill, MA).

L-tartaric acid was obtained from Sigma Aldrich Co. (St. Louis, MO).

Sodium tartrate, dihydrate was obtained from Mallinckrodt Chemical (St. Louis, MO).

L-malic acid was obtained from Sigma Aldrich Co. (St. Louis, MO).

D-gluconic acid, 50 wt% in water, was obtained from Sigma Aldrich Co. (St. Louis, MO).

D-gluconic acid, sodium salt was obtained from Sigma Aldrich Co. (St. Louis, MO).

D-glucuronic acid was obtained from Alfa Aesar (Ward Hill, MA).

Tricarballylic acid was obtained from Alfa Aesar (Ward Hill, MA).

1,2,3,4-butanetetracarboxylic acid was obtained from Alfa Aesar (Ward Hill, MA).

Glycolic acid was obtained from Alfa Aesar (Ward Hill, MA).

D,L-mandelic acid was obtained from Mallinckrodt Chemical (St. Louis, MO).

Malonic acid was obtained from Sigma Aldrich Co. (St. Louis, MO).

Maleic acid was obtained from Sigma Aldrich Co. (St. Louis, MO).

Sodium DL-lactate, 60 w% in water, was obtained from Alfa Aesar (Ward Hill, MA).

Sodium glutamate was obtained from Fisher Scientific (Waltham, MA).

Ethylenediaminetetraacetic acid, tetrasodium salt hydrate was obtained from Sigma Aldrich Co. (St. Louis, MO).

"HEDP" refers to 1-hydroxyethane 1,1-disphosphic acid, 60 wt% in water, obtained from Alfa Aesar (Ward Hill, MA).

"PDAC" refers to poly(diallyl-dimethyl ammonium chloride), a positively charged polymer with molecular weight 100-200K, obtained as a 20 wt% solution in water from Sigma-Aldrich Co. (St. Louis, Missouri).

"$SiO_2$", unless otherwise specified, refers to silica nanoparticles (20-24 nm diameter, ammonium stabilized), obtained from Sigma-Aldrich Co., St. Louis, Missouri as a 40 wt % aqueous dispersion under the trade designation "Ludox AS-40".

"PAA-1.8K" refers to polyacrylic acid, a negatively charged polymer with molecular weight 1.8K, obtained from Polysciences (Warrington, PA)) as a 63 wt% solution in water.

"PAA-50K" refers to polyacrylic acid, a negatively charged polymer with molecular weight 50K, obtained from Polysciences (Warrington, PA)) as a 25 wt% solution in water.

"PAA-250K" refers to polyacrylic acid, a negatively charged polymer with molecular weight 250K, obtained from Sigma Aldrich (St. Louis, MO) as a 35 wt% solution in water.

"PSS" refers to poly(styrene sulfonic acid), a negatively charged polymer (i.e. polyanionic polymer) with molecular weight 75K, obtained from Alfa Aesar (Ward Hill, MA) as a 30 wt% solution in water.

"PVPA" refers to poly(vinylphosphonic acid), a negatively charged polymer (i.e. polyanionic polymer) with molecular weight of 12.6K, obtained from Rhodia UK Limited (England) as a 30 wt% solution in water under the tradename "Albritect™ PVPA".

"HCl" refers to hydrochlorid acid, obtained as a 1 M solution from VWR (West Chester, PA).

"NaOH" refers to sodium hydroxide, obtained as a 1 M solution from VWR (West Chester, PA).

"NaCl" refers to sodium chloride, obtained as a powder from VWR (West Chester, PA).

"TMAOH" refers to tetramethylammonium hydroxide, obtained as a 2.38 wt% solution from Alfa Aesar (Ward Hill, MA).

"TMACl" refers to tetramethylammonium chloride, obtained as a 50 wt% solution from SACHEM, Inc. (Austin, TX).

## Method for Zirconia Nanoparticle Sol Synthesis and Purification

A zirconia sol was made according to WO 2009/085926A2 (Kolb et al.) by hydrolyzing an acetic acid zirconium salt at elevated temperature and pressure. The sol was concentrated via distillation to 40.5% $ZrO_2$ (45% solids) with acetic acid content of about 5-6 mmol per gram of $ZrO_2$.

## General Method for Making Layer-by-Layer Self-Assembled Coatings

Layer-by-layer self-assembled coatings were made using apparatuses purchased from Svaya Nanotechnologies, Inc. (Sunnyvale, CA) and modeled after the system described in US 8,234,998 (Krogman et al.) as well as Krogman et al. Automated Process for Improved Uniformity and Versatility of Layer-by-Layer Deposition, Langmuir 2007, 23, 3137-3141.

**Apparatus #1 ("Small Scale Sprayer")**

The apparatus comprises beakers with the coating solutions and rinse solutions, along with separate airbrush nozzles (Badger Air-Brush Co., Franklin Park, IL, Model Badger 200) with siphon tubes going from the air brush nozzle assemblies into the beakers. Nitrogen (e.g., at a pressure of 30 psi (0.21 MPa)) is driven to the airbrush nozzles and controlled with solenoid valves. Flow rates from each nozzle are approximately 0.3 mL/s. The float glass substrate is stationary and mounted a distance of 20 cm from the airbrush nozzles. In a typical coating sequence, the polycation (e.g. PDAC) solution is sprayed onto the substrate (e.g., for 5 seconds). Next, DI water rinse solution is sprayed onto the substrate (e.g., for 10 seconds). Next, after a dwell time (e.g., of 5 seconds), the polyanion (e.g., $SiO_2$ or $ZrO_2$) solution is sprayed onto the substrate (e.g., for 5 seconds). Finally, the DI water solution is sprayed onto the substrate (e.g., for 10 seconds), followed by another dwell (e.g., of 5 seconds). The above coating sequence is repeated to deposit a desired number of "bi-layers".

**Apparatus #2 ("Mid-Scale Sprayer")**

The apparatus comprises pressure vessels loaded with the coating solutions. Spray nozzles with a flat spray pattern (from Spraying Systems, Inc., Wheaton, Illinois) are mounted to spray the coating solutions and rinse water at specified times, controlled by solenoid valves. The pressure vessels (Alloy Products Corp., Waukesha, WI) containing the coating solutions are pressurized with nitrogen (e.g., to 30 psi (0.21 MPa)), while the pressure vessel containing DI water is pressurized with air (e.g., to 30 psi (0.21 MPa)). Flow rates from the coating solution nozzles are about 10 gallons per hour, while flow rate from the DI water rinse nozzles are about 40 gallons per hour. The substrate is mounted on a vertical translation stage and held in place with a vacuum chuck. In a typical coating sequence, the polycation (e.g., PDAC) solution is sprayed onto the substrate while the stage moves vertically downward (e.g., at 76 mm/sec). Next, after a dwell time (e.g., of about 12 seconds), the DI water solution is sprayed onto the substrate while the stage moves vertically upward (e.g., at 102 mm/sec). Next, after a dwell time (e.g., of about 4 seconds), the polyanion (e.g. $SiO_2$ or $ZrO_2$) solution is sprayed onto the substrate while the stage moves vertically downward (e.g., at 76 mm/sec). Another dwell period (e.g., of 12 seconds) is allowed to elapse. Finally, the DI water solution is sprayed onto the substrate while the stage moves vertically upward (e.g., at 102 mm/sec), and a dwell period (e.g., of 4 seconds) is allowed to elapse. The above coating sequence is repeated to deposit a desired number of "bi-layers".

The coatings are generally denoted as $(\text{Polycation/Polyanion})_n$ where n is the number of deposited "bi-layers". A "bi-layer" refers to the combination of a polycation layer and a polyanion layer. A polycation layer can comprise polycationic polymers or nanoparticles. Similarly, a polyanion layer can comprise polyanionic polymers or nanoparticles. Coatings are dried with compressed air or nitrogen following the coating process.

**Method for Determining the pH of the Coating Solutions**

The pH of the solutions used for coating was determined using a VWR SYMPHONY rugged bulb pH electrode connected to a VWR SYMPHONY pH meter. Standard buffer solutions were used for calibration.

**Method for Determining Thickness and Refractive Index of Layer-by-Layer Self-Assembled Coatings**

Coating thickness was determined with an F10-AR reflectometer (Filmetrics, San Diego, CA).

**Method for Measuring UV and Visible Reflectance of Samples**

The visible reflectance of samples prepared according to the examples described below were measured with an F10-AR reflectometer (Filmetrics, San Diego, CA).

**Preparative Example 1 (PE1): Zirconia Nanoparticle Surface Modification Procedure (with dialysis)**

$ZrO_2$ nanoparticles at 40.5 wt% $ZrO_2$ (prepared via the "Method for Zirconia Nanoparticle Sol Synthesis and Purification" above) were diluted to 15 wt% with DI water in a volume of 200 mL. A volume of 60 mL of 1 M trisodium citrate dihydrate was added to this suspension with vigorous stirring. The ratio of citrate modifier to $ZrO_2$ was thus about 2 mmol citrate to 1 gram $ZrO_2$. This suspension, denoted as CA-$ZrO_2$, was then dialyzed against a Spectrapor 3500 MWCO regenerated cellulose dialysis membrane to remove excess citrate and acetic acid. The dialysis bath had a volume of approximately 4 L and was stirred with a magnetic stir bar. The water was replaced with fresh DI water at least five times with at least 2 hour intervals between changes. The resulting CA-$ZrO_2$ had a concentration of 12% solids.

**Preparative Example 2 (PE2): Zirconia Nanoparticle Surface Modification Procedure (no dialysis)**

$ZrO_2$ nanoparticles at 40.5 wt% $ZrO_2$ (prepared via the "Method for Zirconia Nanoparticle Sol Synthesis and Purification" above) were diluted to about 1 wt% with DI water in a volume of 2965 mL. A volume of 35 mL of 1 M trisodium citrate dihydrate was added to this suspension with vigorous stirring. The ratio of citrate modifier to $ZrO_2$ was thus about 1.15 mmol citrate to 1 gram $ZrO_2$. This suspension, denoted as CA-$ZrO_2$, was not subjected to dialysis or any subsequent purification.

**Example 1-4 (EX1-EX4): High refractive index, (PDAC/CA-$ZrO_2$)$_{15}$ layer-by-layer coatings**

PDAC at 20 wt% in water was diluted to 20 mM with respect to the repeat unit (i.e. 0.32 wt%) with DI water in a volume of 150 mL. CA-$ZrO_2$ nanoparticles (from Preparative Example 1) at 12 wt% were diluted to 1.0 wt% with DI water in a volume of 150 mL. NaCl was added to the CA-$ZrO_2$ suspension to a concentration of 0 mM (EX1), 10 mM (EX2), 50 mM (EX3), or 100 mM (EX4). The pH of each coating solution was adjusted to 10.0 with NaOH. Layer-by-layer self-assembled coatings were prepared on 2"x2"x1/8" thick float glass substrates via the "General Method for Making Layer-by-Layer Self-Assembled Coatings (Apparatus #1)" described above. Coatings with 15 bi-layers were made. PDAC was the polycationic component of the coating. CA-$ZrO_2$ nanoparticles were the polyanionic component of the coating. Thickness and refractive index of the coatings were measured via the "Method for Determining Thickness and Refractive Index of Layer-by-Layer Self-Assembled Coatings". Refractive index of the coatings ranged from 1.63 to 1.72. Data are displayed in Table 1 below.

**Example 5: High refractive index, (PDAC/TA-$ZrO_2$)$_{15}$ layer-by-layer coating**

PDAC at 20 wt% in water was diluted to 20 mM with respect to the repeat unit (i.e. 0.32 wt%) with DI water in a volume of 150 mL. Tartarate-modified $ZrO_2$ nanoparticles, denoted as TA-$ZrO_2$, were prepared according to Preparative Example 1, except using sodium tartarate dihydrate instead of trisodium citrate dihydrate. NaCl was added to the TA-$ZrO_2$ suspension to a concentration of 10 mM. The pH of each coating solution was adjusted to 10.0 with NaOH. A layer-by-layer self-assembled coating was prepared on 2"x2"x1/8" thick float glass substrates via the "General Method for Making Layer-by-Layer Self-Assembled Coatings (Apparatus #1)" described above. A coating with 15 bi-layers was made. PDAC was the polycationic component of the coating. TA-$ZrO_2$ nanoparticles were the polyanionic component of the coating. Thickness and refractive index of the coating were determined via the "Method for Determining Thickness and Refractive Index of Layer-by-Layer Self-Assembled Coatings". Data are displayed in Table 1 below.

**Example 6: High refractive index, (PDAC/GA-$ZrO_2$)$_{15}$ layer-by-layer coating**

PDAC at 20 wt% in water was diluted to 20 mM with respect to the repeat unit (i.e. 0.32 wt%) with DI water in a volume of 150 mL. Gluconate-modified $ZrO_2$ nanoparticles, denoted as GA-$ZrO_2$, were prepared according to Preparative Example 1, except using D-gluconic acid, sodium salt instead of trisodium citrate dihydrate. NaCl was added to the GA-$ZrO_2$ suspension to a concentration of 10 mM. The pH of each coating solution was adjusted to 10.0 with NaOH. A layer-by-layer self-assembled coating was prepared on 2" x 2" x 1/8" thick float glass substrates via the "General Method for Making Layer-by-Layer Self-Assembled Coatings (Apparatus #1)" described above. A coating with 15 bi-layers was made. PDAC was the polycationic component of the coating. GA-$ZrO_2$ nanoparticles were the polyanionic component of the coating. Thickness and refractive index of the coating were determined via the "Method for Determining Thickness and Refractive Index of Layer-by-Layer Self-Assembled Coatings". Data are displayed in Table 1 below.

**Example 7-8 (EX7-EX8): High refractive index, "all-nanoparticle" ($ZrO_2$/$ZrO_2$-CA)$_{15}$ layer-by-layer coatings**

$ZrO_2$ at 40.5 wt% in water (prepared via the "Method for Zirconia Nanoparticle Sol Synthesis and Purification" above) was diluted to 1.0 wt% with DI water in a volume of 150 mL. CA-$ZrO_2$ nanoparticles at 12 wt% (from Preparative Example 1) were diluted to 1.0 wt% with DI water in a volume of 150 mL. NaCl was added to both suspensions to a concentration of 10 mM (EX9) and 100 mm (EX10). The pH of both suspensions was adjusted to 4.0 with 1.0 M HCl and 1.0 M NaOH. Layer-by-layer self-assembled coatings were prepared on 2"x2"x1/8" thick float glass substrates via the "General Method for Making Layer-by-Layer Self-Assembled Coatings (Apparatus #1)" described above. Coatings with 15 bi-layers were made. $ZrO_2$ nanoparticles were the polycationic components of the coating. CA-$ZrO_2$ nanoparticles were the polyanionic component of the coating. Thickness and refractive index of the coating were determined via the "Method for Determining Thickness and Refractive Index of Layer-by-Layer Self-Assembled Coatings". Refractive index of the coatings ranged from 1.61 to 1.67. Data are displayed in Table 1 below.

**Example 9-14 (EX9-EX14): High refractive index, $(PDAC/CA\text{-}ZrO_2)_{15}$ layer-by-layer coatings on the small-scale sprayer with undialyzed CA-$ZrO_2$.**

PDAC at 20 wt% in water was diluted to 20 mM with respect to the repeat unit (i.e. 0.32 wt%) with DI water in a volume of 150 mL. CA-$ZrO_2$ nanoparticles (from Preparative Example 2) at about 1 wt% was used with any further dilution. NaCl was added to the CA-$ZrO_2$ suspension to a concentration of 0 mM (EX11), 5 mM (EX12), 10 mM (EX13), 25 mM (EX14), 50 mM (EX15), or 100 mM (EX16). The pH of each coating solution was adjusted to 10.0 with NaOH. Layer-by-layer self-assembled coatings were prepared on 2"x2"x1/8" thick float glass substrates via the "General Method for Making Layer-by-Layer Self-Assembled Coatings (Apparatus #1)" described above. Coatings with 15 bi-layers were made. PDAC was the polycationic component of the coating. CA-$ZrO_2$ nanoparticles were the polyanionic component of the coating. Thickness and refractive index of the coating were determined via the "Method for Determining Thickness and Refractive Index of Layer-by-Layer Self-Assembled Coatings". Refractive index of the coatings ranged from 1.65 to 1.77. Data are displayed in Table 1 below.

**Example 15 (EX15): Visible light reflecting coating (i.e. dielectric mirror) based on high index CA-$ZrO_2$ layers and low index $SiO_2$ layers. 7 stack formulation.**

PDAC at 20 wt% in water was diluted to 20 mM with respect to the repeat unit (i.e. 0.32 wt%) with DI water in a volume of 3.5 L. The pH was adjusted to 10.0 with TMAOH. CA-$ZrO_2$ nanoparticles at 12 wt% (from Preparative Example 1) were diluted to 1.0 wt% with DI water in a volume of 3.5 L. The pH was adjusted to 10.0 with TMAOH. NaCl was added to the CA-$ZrO_2$ suspension to a concentration of 10 mM. $SiO_2$ nanoparticles at 40.0 wt% were diluted to 1.0 wt% with DI water in a volume of 3.5 L. The pH was adjusted to 11.5 with TMAOH and TMACl was added to a concentration of 48 mM.

Layer-by-layer self-assembled coatings were prepared on 12"x12"x1/8" float glass via the "General Method for Making Layer-by-Layer Self-Assembled Coatings (Apparatus #2)" described above. $(PDAC/CA\text{-}ZrO_2)_{10}$, which is referred to as a "high index stack" (H) was deposited on the substrate first. Using the "Method for Determining Thickness and Refractive Index of Layer-by-Layer Self-Assembled Coatings" the high index stack on glass was measured to have a thickness of 72 nm and refractive index of 1.73 at 633 nm. Next, $(PDAC/SiO_2)_6$, which is referred to as a "low index stack" (L) was deposited onto the substrate. Using the "Method for Determining Thickness and Refractive Index of Layer-by-Layer Self-Assembled Coatings", the low index stack itself on a separate glass plate was measured to have a thickness of 110 nm and a refractive index of 1.27 at 633 nm. A total of seven stacks were deposited with the sequence HLHLHLH, respectively. Samples were dried under a stream of $N_2$ between each stack. Using the "Method for Determining UV and Visible Reflectance of Samples" described above, the resulting coating was measured to have a strong reflection peak in the visible light wavelength range centered at 531 nm. The height of the peak was 66.8% reflectance.

**Example 16 (EX16): Visible light reflecting coating (i.e. dielectric mirror) based on high index CA-$ZrO_2$ layers and low index $SiO_2$ layers. 11 stack formulation.**

PDAC at 20 wt% in water was diluted to 20 mM with respect to the repeat unit (i.e. 0.32 wt%) with DI water in a volume of 3.5 L. The pH was adjusted to 10.0 with TMAOH. CA-$ZrO_2$ nanoparticles at 12 wt% (from Preparative Example 1) were diluted to 1.0 wt% with DI water in a volume of 3.5 L. The pH was adjusted to 10.0 with TMAOH. NaCl was added to the CA-$ZrO_2$ suspension to a concentration of 10 mM. $SiO_2$ nanoparticles at 40.0 wt% were diluted to 1.0 wt% with DI water in a volume of 3.5 L. The pH was adjusted to 11.5 with TMAOH and TMACl was added to a concentration of 48 mM.

Layer-by-layer self-assembled coatings were prepared on 12"x12"x1/8" float glass via the "General Method for Making Layer-by-Layer Self-Assembled Coatings (Apparatus #2)" described above. $(PDAC/CA\text{-}ZrO_2)_{11}$, which is referred to as a "high index stack" (H) was deposited on the substrate first. Using the "Method for Determining Thickness and Refractive Index of Layer-by-Layer Self-Assembled Coatings" the high index stack on glass was measured to have a thickness of 96 nm and refractive index of 1.73 at 633 nm. Next, $(PDAC/SiO_2)_6$, which is referred to as a "low index stack" (L) was deposited onto the substrate. Using "Method for Determining Thickness and Refractive Index of Layer-by-Layer Self-Assembled Coatings", the low index stack itself on a separate glass plate was measured to have a thickness of 110 nm and a refractive index of 1.27 at 633 nm. A total of eleven stacks were deposited with the sequence HLHLHLHLHLH, respectively. Samples were dried under a stream of $N_2$ between each stack. Using the "Method for Determining UV and Visible Reflectance of Samples" described above, the resulting coating was measured to have a strong reflection peak in the visible light wavelength range centered at 610 nm. The height of the peak was 86.9% reflectance.

**Comparative Example 1-8 (CE1-CE8): Lower refractive index $ZrO_2$ layer-by-layer coatings with PAA**

PAA-1.8K at 63 wt% in water was diluted to 20 mM (with respect to the repeat unit) with DI water in a volume of 150 mL. PAA-50K at 25 wt% in water was diluted to 20 mM (with respect to the repeat unit) with DI water in a volume of 150 mL. PAA-250K at 35 wt% in water was diluted to 20 mM (with respect to the repeat unit) with DI water in a volume of 150 mL. $ZrO_2$ at 40.5 wt% in water (prepared via the "Method for Zirconia Nanoparticle Sol Synthesis and Purification" above) was diluted to 1.0 wt% with DI water in a volume of 150 mL. NaCl was added to the $ZrO_2$ suspension to concentrations of 0, 50, or 100 mM. pH of both coating solutions was altered with HCl and/or NaOH to 3.0, 4.0, and/or 5.0. Layer-by-layer self-assembled coatings were prepared on 2"x2"x1/8" thick float glass substrates with the "General Method for Making Layer-by-Layer Self-Assembled Coatings (Apparatus #1)" described above. $ZrO_2$ nanoparticles were the polycationic component of the coatings. PAA was the polyanionic component of the coatings. Thickness and refractive index of the coating were determined via the "Method for Determining Thickness and Refractive Index of Layer-by-Layer Self-Assembled Coatings". Refractive index of the coatings measured ranged from 1.30 to 1.44. Data are displayed in Table 1 below.

**Comparative Example 9-17 (CE9-CE17): Lower refractive index $ZrO_2$ layer-by-layer coatings with PSS**

PSS at 30 wt% in water was diluted to 20 mM (with respect to the repeat unit) with DI water in a volume of 150 mL. $ZrO_2$ at 40.5 wt% in water (prepared via the "Method for Zirconia Nanoparticle Sol Synthesis and Purification" above) was diluted to 1.0 wt% with DI water in a volume of 150 mL. NaCl was added to the $ZrO_2$ suspension to concentrations of 25, 50, or 100 mM. pH of both coating solutions was altered with HCl and/or NaOH to 3.0, 4.0, and/or 5.0. Layer-by-layer self-assembled coatings were prepared on 2" x 2" x 1/8" thick float glass substrates with the "General Method for Making Layer-by-Layer Self-Assembled Coatings (Apparatus #1)" described above. $ZrO_2$ nanoparticles were the polycationic component of the coatings. PSS was the polyanionic component of the coatings. Thickness and refractive index of the coating were determined via the "Method for Determining Thickness and Refractive Index of Layer-by-Layer Self-Assembled Coatings". Refractive index of the coatings ranged from 1.50 to 1.56. Data are displayed in Table 1 below.

**Comparative Example 18-26 (CE18-CE26): Lower refractive index $ZrO_2$ layer-by-layer coatings with PVPA**

PVPA at 30 wt% in water was diluted to 20 mM (with respect to the repeat unit) with DI water in a volume of 150 mL. $ZrO_2$ at 40.5 wt% in water (prepared via the "Method for Zirconia Nanoparticle Sol Synthesis and Purification" above) was diluted to 1.0 wt% with DI water in a volume of 150 mL. NaCl was added to the $ZrO_2$ suspension to concentrations of 0, 50, or 150 mM. pH of both coating solutions was altered with HCl and/or NaOH to 3.0, 4.0, and/or 5.0. Layer-by-layer self-assembled coatings were prepared on 2"x2"x1/8" thick float glass substrates with the "General Method for Making Layer-by-Layer Self-Assembled Coatings (Apparatus #1)" described above. $ZrO_2$ nanoparticles were the polycationic component of the coatings. PVPA was the polyanionic component of the coatings. Thickness and refractive index of the coating were determined via the "Method for Determining Thickness and Refractive Index of Layer-by-Layer Self-Assembled Coatings". Refractive index of the coatings ranged from 1.41 to 1.49. Data are displayed in Table 1 below.

**Comparative Example 27-29 (CE27-CE29): Lower refractive index, $(PDAC/HEDP\text{-}ZrO_2)_{15}$ layer-by-layer coatings**

PDAC at 20 wt% in water was diluted to 20 mM with respect to the repeat unit (i.e. 0.32 wt%) with DI water in a volume of 150 mL. HEDP modified $ZrO_2$ nanoparticles, abbreviated as "HEDP-$ZrO_2$" were prepared identically to Preparative Example 1, except HEDP was substituted for the trisodium citrate. HEDP-$ZrO_2$ nanoparticles at 12 wt% were diluted to 1.0 wt% with DI water in a volume of 150 mL. NaCl was added to the HEDP-$ZrO_2$ suspension to a concentration of 0 mM (CE27), 10 mM (CE28) or 50 mM (CE29). The pH of each coating solution was adjusted to 10.0 with NaOH. Layer-by-layer self-assembled coatings were prepared on 2"x2"x1/8" thick float glass substrates with the "General Method for Making Layer-by-Layer Self-Assembled Coatings (Apparatus #1)" described above. Coatings with 15 bi-layers were made. PDAC was the polycationic component of the coatings. HEDP-$ZrO_2$ nanoparticles were the polyanionic component of the coatings. Thickness and refractive index of the coating were determined via the "Method for Determining Thickness and Refractive Index of Layer-by-Layer Self-Assembled Coatings". Refractive index of the coatings ranged from 1.56 to 1.62. Data are displayed in Table 1. The coatings were less uniform in thickness than those in the Examples. Standard deviation in thickness (from a total of nine measurements per sample) was about 14% for Comparative Examples 27-29 while standard deviation in thickness ranged from about 2-6% for Examples 1-16.

**Table 1:** Thickness and refractive index data for $ZrO_2$ nanoparticle-containing layer-by-layer self-assembled coatings.

| | **Polycation** | **Polyanion** | **# bi-layers** | **Amount of NaCl in $ZrO_2$ (mM)** | **pH of both** | **Thickness (nm)** | **Refractive Index (at 633 nm)** |
|---|---|---|---|---|---|---|---|
| EX1 | PDAC | CA-$ZrO_2$ | 15 | 0 | 10 | 57.3 | 1.72 |
| EX2 | PDAC | CA-$ZrO_2$ | 15 | 10 | 10 | 129.9 | 1.71 |
| EX3 | PDAC | CA-$ZrO_2$ | 15 | 50 | 10 | 266.0 | 1.63 |
| EX4 | PDAC | CA-$ZrO_2$ | 15 | 100 | 10 | 286.0 | 1.63 |
| EX5 | PDAC | TA-$ZrO_2$ | 15 | 10 | 10 | 108.0 | 1.68 |
| EX6 | PDAC | GA-$ZrO_2$ | 15 | 10 | 10 | 144.4 | 1.62 |
| EX7 | $ZrO_2$ | CA-$ZrO_2$ | 15 | 10 | 4 | 173.1 | 1.67 |
| EX8 | $ZrO_2$ | CA-$ZrO_2$ | 15 | 100 | 4 | 389.3 | 1.61 |
| EX9 | PDAC | CA-$ZrO_2$ | 15 | 0 | 10 | 275.1 | 1.77 |
| EX10 | PDAC | CA-$ZrO_2$ | 15 | 5 | 10 | 299.1 | 1.75 |
| EX11 | PDAC | CA-$ZrO_2$ | 15 | 10 | 10 | 330.7 | 1.74 |
| EX12 | PDAC | CA-$ZrO_2$ | 15 | 25 | 10 | 368.4 | 1.72 |
| EX13 | PDAC | CA-$ZrO_2$ | 15 | 50 | 10 | 470.4 | 1.67 |
| EX14 | PDAC | CA-$ZrO_2$ | 15 | 100 | 10 | 603.2 | 1.65 |
| CE1 | $ZrO_2$ | PAA-250K | 30 | 0 | 3 | 86.6 | 1.30 |
| CE2 | $ZrO_2$ | PAA-250K | 30 | 0 | 5 | 339.5 | 1.43 |
| CE3 | $ZrO_2$ | PAA-250K | 30 | 100 | 3 | 393.6 | 1.41 |
| CE4 | $ZrO_2$ | PAA-250K | 30 | 100 | 5 | 447.5 | 1.37 |
| CE5 | $ZrO_2$ | PAA-50K | 30 | 0 | 4 | 69.4 | 1.34 |
| CE6 | $ZrO_2$ | PAA-50K | 30 | 50 | 4 | 304.4 | 1.39 |
| CE7 | $ZrO_2$ | PAA-1.8K | 30 | 50 | 4 | 388.3 | 1.44 |
| CE8 | $ZrO_2$ | PAA-1.8K | 30 | 100 | 3 | 473.1 | 1.42 |
| CE9 | $ZrO_2$ | PSS | 30 | 25 | 3 | 179.0 | 1.56 |
| CE10 | $ZrO_2$ | PSS | 30 | 50 | 3 | 236.8 | 1.55 |
| CE11 | $ZrO_2$ | PSS | 30 | 100 | 3 | 420.8 | 1.54 |
| CE12 | $ZrO_2$ | PSS | 30 | 25 | 4 | 317.7 | 1.56 |
| CE13 | $ZrO_2$ | PSS | 30 | 50 | 4 | 426.5 | 1.54 |
| CE14 | $ZrO_2$ | PSS | 30 | 100 | 4 | 358.8 | 1.55 |
| CE15 | $ZrO_2$ | PSS | 30 | 25 | 5 | 378.1 | 1.51 |
| CE16 | $ZrO_2$ | PSS | 30 | 50 | 5 | 367.5 | 1.52 |
| CE17 | $ZrO_2$ | PSS | 30 | 100 | 5 | 474.0 | 1.50 |

(continued)

| | Polycation | Polyanion | # bi-layers | Amount of NaCl in $ZrO_2$ (mM) | pH of both | Thickness (nm) | Refractive Index (at 633 nm) |
|---|---|---|---|---|---|---|---|
| CE18 | $ZrO_2$ | PVPA | 30 | 0 | 3 | 91.9 | 1.41 |
| CE19 | $ZrO_2$ | PVPA | 30 | 50 | 3 | 292.1 | 1.42 |
| CE20 | $ZrO_2$ | PVPA | 30 | 150 | 3 | 372.8 | 1.46 |
| CE21 | $ZrO_2$ | PVPA | 30 | 0 | 4 | 194.0 | 1.46 |
| CE22 | $ZrO_2$ | PVPA | 30 | 50 | 4 | 346.1 | 1.46 |
| CE23 | $ZrO_2$ | PVPA | 30 | 150 | 4 | 423.0 | 1.46 |
| CE24 | $ZrO_2$ | PVPA | 30 | 0 | 5 | 341.2 | 1.47 |
| CE25 | $ZrO_2$ | PVPA | 30 | 50 | 5 | 459.1 | 1.49 |
| CE26 | $ZrO_2$ | PVPA | 30 | 150 | 5 | 660.8 | 1.47 |
| CE27 | PDAC | HEDP-$ZrO_2$ | 15 | 0 | 10 | 54.3 | 1.62 |
| CE28 | PDAC | HEDP-$ZrO_2$ | 15 | 10 | 10 | 249.5 | 1.63 |
| CE29 | PDAC | HEDP-$ZrO_2$ | 15 | 50 | 10 | 499.8 | 1.56 |

**Example 17: Exposed Lens Retroreflective Article Comprising a Layer-by-Layer Dielectric Mirror with Nanozirconia-based High Index Stacks**

A temporary carrier web was prepared in a procedure as described in US Patent No. 5,474,827. A polyethylene layer (i.e., a polymeric carrier layer) was coated on a paper backing (i.e., support sheet). The polyethylene layer was heated, and 3M glass beads with refractive index of 1.93 and with diameter in the range of 40-90 micrometers were cascaded and sunk into the polyethylene. The sink depth was smaller than the glass beads diameter, and a portion of the microspheres remained exposed above the surface of the polyethylene.

A protective layer composition was formulated and coated onto the glass bead layer. The protective layer coating composition was 3.72 grams of Vitel 3550B (Bostik Company, Wauwatosa, Wisconsin), 1.34 grams of Vitel 5833 (Bostik Company, Wauwatosa, Wisconsin), 0.15 grams of Silquest A1310 (Momentive Performance Materials, Strongsville, Ohio), 0.1 grams of dibutyl tin dilaurate catalyst, 0.3 grams of Desmodur L75 (Bayer MaterialScience, Pittsburgh, Pennsylvania), and 50.75 grams of ethyl acetate solvent. The protective layer composition prepared above was coated on the glass bead layer with a coating bar gap set at 51 micrometers (2 mils). The coating was dried at 65°C (149°F) for 3 minutes, followed by 90°C (194°F) for 2 minutes to form a protective layer.

A reflective, dielectric mirror, layer-by-layer coating was then deposited onto the protective layer surface. The protective layer was subjected to air corona treatment with a BD-20AC Laboratory Corona Treater (Electro-Technic Products, Chicago, Illinois). A coating following the method of Example 17 above was spray coated onto the substrate. After drying the coating under a stream of nitrogen, 3M 3510 SCOTCH packaging tape available from 3M Company (St. Paul, MN) was laminated to the coating surface by hand. The tape was then removed, which stripped the glass beads from the polyethylene liner, generating an "exposed lens retroreflective article". The article had a retroreflectivity coefficient of 212 Candela/lux/$m^2$ at a 5 degree entrance angle and 0.2 degree observation angle as measured with a Roadvista (San Diego, California) 922 handheld retroreflectometer.

**Example 18: Screening additional surface modifiers for nanozirconia**

$ZrO_2$ nanoparticles at ~40.5 wt% $ZrO_2$ (prepared via the "Method for Zirconia Nanoparticle Sol Synthesis and Purification" above) were diluted to 1 wt% with DI water in a volume of 20 mL. Separate solutions of each of the candidate surface modifiers in Table 2 below were prepared at a concentration of 1 M in DI water. With vigorous stirring, 0.3 mL of each candidate surface modifier solution (at 1 M) was added to the 20 mL of $ZrO_2$ nanoparticles. For surface modifiers with solubility limits below 1 M, lower concentration stock solutions (and accordingly greater volumes) were used. The

final ratio of surface modifier to $ZrO_2$ in each case was 1.5 mmol modifier to 1 gram of $ZrO_2$. The stability of the sol after addition of each modifier (and pH adjustment up to pH 10 with NaOH) is listed in Table 2 below. "Stable" means the sol is clear to translucent and there is no visible settling within 1 hour. "Unstable" means the sol is opaque and there is visible settling that occurs within 1 hour.

**Table 2:** Surface modifiers for zirconia nanoparticles

| **Modifier** | **# of carboxyl groups** | **$\alpha$-hydroxy acid (or carboxylate salt thereof)?** | **Sol Appearance at pH=10** |
|---|---|---|---|
| D-Gluconic acid | 1 | Yes | Stable |
| D-Gluconic acid, sodium salt | 1 | Yes | Stable |
| D-Glucuronic acid | 1 | Yes | Stable |
| Glycolic acid | 1 | Yes | Unstable |
| Lactic acid | 1 | Yes | Unstable |
| Sodium D,L-lactate | 1 | Yes | Unstable |
| D,L-Mandelic acid | 1 | Yes | Unstable |
| Malonic acid | 2 | No | Unstable |
| Maleic acid | 2 | No | Unstable |
| Monosodium glutamate | 2 | No | Unstable |
| L-Tartaric acid | 2 | Yes | Stable |
| Sodium L-Tartrate | 2 | Yes | Stable |
| L-Malic acid | 2 | Yes | Stable |
| Tricarballylic acid | 3 | No | Unstable |
| Citric acid | 3 | Yes | Stable |
| Trisodium citrate | 3 | Yes | Stable |
| 1,2,4,5-Butanetetracarboxylic acid | 4 | No | Unstable |
| Ethylenediaminetetra-acetic acid, tetrasodium salt (EDTA) | 4 | No | Unstable |

## Claims

**1.** A method of making an article, the method comprising:

obtaining a first composition comprising water; a base; and surface-modified zirconia nanoparticles dispersed in the water, the surface-modified zirconia nanoparticles functionalized with an alpha-hydroxy acid or salt thereof, wherein the alpha-hydroxy acid or salt is of Formula I:

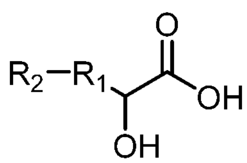

I

wherein Ri is selected from a polyether or a polyalcohol; and $R_2$ is selected from a linear or branched alkyl or aryl group; a hydroxyl group; or H; or
wherein $R_1$ is selected from a linear or branched alkylene or arylene group; or a covalent bond; and $R_2$ is selected from a carboxylic acid group, a sulfuric acid group, a sulfinic acid group, a sulfonic acid group, a hydroxamic acid, or a salt thereof;

obtaining a second composition comprising a polycationic polymer or a dispersion of inorganic oxide nanoparticles; and
disposing onto a substrate a plurality of layers by layer-by-layer self-assembly of the first composition and the second composition.

**2.** The method of claim 1, wherein the plurality of layers has a refractive index of at least 1.60, 1.62, 1.64, 1.66, 1.68, 1.70, 1.72, 1.74, or 1.76.

**3.** The method of claim 1 or claim 2, wherein the first composition has a pH of at least 8.0.

**4.** The method of any of claims 1 to 3, wherein the first composition and the second composition are each disposed onto the substrate to form at least 4 bi-layers.

**5.** The method of any of claims 1 to 4, wherein the first composition contains excess alpha-hydroxy acid or salt when disposed on the substrate.

**6.** An article comprising:

a substrate; and
a plurality of layers comprising bi-layers, wherein a portion of the layers comprise surface-modified zirconia nanoparticles functionalized with an alpha-hydroxy acid or salt thereof, wherein the alpha-hydroxy acid or salt is of Formula I:

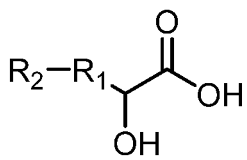
I

wherein $R_1$ is selected from a polyether or a polyalcohol; and $R_2$ is selected from a linear or branched alkyl or aryl group; a hydroxyl group; or H; or
wherein $R_1$ is selected from a linear or branched alkylene or arylene group; or a covalent bond; and $R_2$ is selected from a carboxylic acid group, a sulfuric acid group, a sulfinic acid group, a sulfonic acid group, a hydroxamic acid, or a salt thereof.

**7.** The article of claim 6, wherein a portion of the layers comprise a polycationic polymer or inorganic oxide nanoparticles.

**8.** The article of claim 6 or claim 7, wherein the plurality of layers has a refractive index of at least 1.60, 1.62, 1.64, 1.66, 1.68, 1.70, 1.72, 1.74, or 1.76.

**9.** The article of any of claims 6 to 8, wherein the substrate is a visible light transmissive inorganic or organic polymeric material.

**10.** The article of any of claims 7 to 9, wherein the bi-layers comprise alternating first layers and second layers, wherein the first layers comprise the surface-modified zirconia nanoparticles and the second layers comprise the polycationic polymer or inorganic oxide nanoparticles.

**11.** The article of any of claims 6 to 10, comprising at least 15 bi-layers.

**12.** A dielectric mirror comprising:

a substrate;
a first stack of bi-layers disposed on the substrate; and
a second stack of bi-layers positioned in planar contact with the first stack;
wherein each bi-layer in the first stack of bi-layers comprises the portion of layers of claim 6 comprising surface-modified zirconia-nanoparticles; and
wherein the second stack of bi-layers exhibits a refractive index of less than 1.50.

13. The dielectric mirror of claim 12, wherein the first stack of bi-layers exhibits a refractive index greater than the refractive index exhibited by the second stack of bi-layers by at least 0.30, or 0.35, or 0.40, or 0.45, or 0.50.

14. An exposed lens retroreflective article comprising:

a binder layer;
a layer of transparent microspheres partially embedded in the binder layer; and
a reflective layer disposed between the binder layer and the microspheres, the reflective layer comprising the dielectric mirror of claim 12.

**Patentansprüche**

1. Verfahren zur Herstellung eines Artikels, wobei das Verfahren umfasst:

Erhalten einer ersten Zusammensetzung, umfassend Wasser; eine Base; und oberflächenmodifizierte Zirkonoxidnanoteilchen, die im Wasser dispergiert sind, wobei die oberflächenmodifizierten Zirkonoxidnanoteilchen mit einer alpha-Hydroxysäure oder einem Salz davon funktionalisiert sind, wobei die alpha-Hydroxysäure oder das Salz die Formel I aufweist:

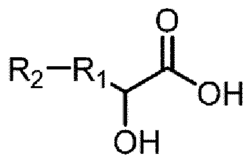

I

wobei $R_1$ ausgewählt ist aus einem Polyether oder einem Polyalkohol; und $R_2$ ausgewählt ist aus einer linearen oder verzweigten Alkyl- oder Arylgruppe; einer Hydroxylgruppe; oder H; oder
wobei $R_1$ ausgewählt ist aus einer linearen oder verzweigten Alkylen- oder Arylengruppe; oder einer kovalenten Bindung; und $R_2$ ausgewählt ist aus einer Carbonsäuregruppe, einer Schwefelsäuregruppe, einer Sulfinsäuregruppe, einer Sulfonsäuregruppe, einer Hydroxamsäure oder einem Salz davon;
Erhalten einer zweiten Zusammensetzung, umfassend ein polykationisches Polymer oder eine Dispersion anorganischer Oxidnanoteilchen; und
Anordnen einer Vielzahl von Schichten auf einem Substrat durch schichtweises Selbstanordnen der ersten Zusammensetzung und der zweiten Zusammensetzung.

2. Das Verfahren nach Anspruch 1, wobei die Vielzahl von Schichten einen Brechungsindex von mindestens 1,60, 1,62, 1,64, 1,66, 1,68, 1,70, 1,72, 1,74 oder 1,76 aufweist.

3. Das Verfahren nach Anspruch 1 oder Anspruch 2, wobei die erste Zusammensetzung einen pH-Wert von mindestens 8,0 aufweist.

4. Das Verfahren nach einem der Ansprüche 1 bis 3, wobei die erste Zusammensetzung und die zweite Zusammensetzung jeweils auf dem Substrat angeordnet werden, um mindestens 4 Doppelschichten zu bilden.

5. Das Verfahren nach einem der Ansprüche 1 bis 4, wobei die erste Zusammensetzung überschüssige alpha-Hydroxysäure oder -salz enthält, wenn sie auf dem Substrat angeordnet wird.

6. Ein Artikel, umfassend:

ein Substrat; und
eine Mehrzahl von Schichten, die Doppelschichten umfassen, wobei ein Abschnitt der Schichten oberflächenmodifizierte Zirkonoxidnanoteilchen umfasst, die mit einer alpha-Hydroxysäure oder einem Salz davon funktionalisiert sind, wobei die alpha-Hydroxysäure oder das Salz die Formel I aufweist:

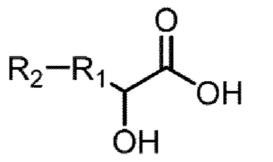

I

wobei $R_1$ ausgewählt ist aus einem Polyether oder einem Polyalkohol; und $R_2$ ausgewählt ist aus einer linearen oder verzweigten Alkyl- oder Arylgruppe; einer Hydroxylgruppe; oder H; oder
wobei $R_1$ ausgewählt ist aus einer linearen oder verzweigten Alkylen- oder Arylengruppe; oder einer kovalenten Bindung; und $R_2$ ausgewählt ist aus einer Carbonsäuregruppe, einer Schwefelsäuregruppe, einer Sulfinsäuregruppe, einer Sulfonsäuregruppe, einer Hydroxamsäure oder einem Salz davon.

7. Der Artikel nach Anspruch 6, wobei ein Abschnitt der Schichten ein polykationisches Polymer oder anorganische Oxidnanoteilchen umfasst.

8. Der Artikel nach Anspruch 6 oder Anspruch 7, wobei die Mehrzahl von Schichten einen Brechungsindex von mindestens 1,60, 1,62, 1,64, 1,66, 1,68, 1,70, 1,72, 1,74 oder 1,76 aufweist.

9. Der Artikel nach einem der Ansprüche 6 bis 8, wobei das Substrat ein sichtbares, lichtdurchlässiges anorganisches oder organisches Polymermaterial ist.

10. Der Artikel nach einem der Ansprüche 7 bis 9, wobei die Doppelschichten alternierende erste Schichten und zweite Schichten umfassen, wobei die ersten Schichten die oberflächenmodifizierten Zirkonoxidnanoteilchen umfassen und die zweiten Schichten das polykationische Polymer oder anorganische Oxidnanoteilchen umfassen.

11. Der Artikel nach einem der Ansprüche 6 bis 10, der mindestens 15 Doppelschichten umfasst.

12. Ein dielektrischer Spiegel, umfassend:

ein Substrat;
einen ersten Stapel von Doppelschichten, der auf dem Substrat angeordnet ist; und
einen zweiten Stapel von Doppelschichten, der in ebenem Kontakt mit dem ersten Stapel angeordnet ist;
wobei jede Doppelschicht in dem ersten Stapel von Doppelschichten den Abschnitt der Schichten nach Anspruch 6 umfasst, der oberflächenmodifizierte Zirkonoxidnanoteilchen umfasst; und
wobei der zweite Stapel von Doppelschichten einen Brechungsindex von weniger als 1,50 aufweist.

13. Der dielektrische Spiegel nach Anspruch 12, wobei der erste Stapel von Doppelschichten einen Brechungsindex aufweist, der um mindestens 0,30 oder 0,35 oder 0,40 oder 0,45 oder 0,50 größer ist als der Brechungsindex, den der zweite Stapel von Doppelschichten aufweist.

14. Ein rückstrahlender Artikel mit exponierten Linsen, umfassend:

eine Bindemittelschicht;
eine Schicht aus transparenten Mikrokugeln, die teilweise in der Bindemittelschicht eingebettet sind; und
eine reflektierende Schicht, die zwischen der Bindemittelschicht und den Mikrokugeln angeordnet ist, wobei die reflektierende Schicht den dielektrischen Spiegel nach Anspruch 12 umfasst.

## Revendications

1. Procédé de fabrication d'un article, le procédé comprenant :

l'obtention d'une première composition comprenant de l'eau ; une base ; et des nanoparticules de zircone modifiées en surface dispersées dans l'eau, les nanoparticules de zircone modifiées en surface fonctionnalisées avec un alpha-hydroxy acide ou un sel de celui-ci, dans lequel l'alpha-hydroxy acide ou sel est de Formule I :

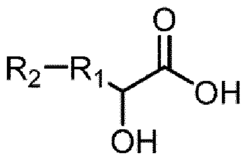

I

dans lequel $R_1$ est choisi parmi un polyéther ou un polyalcool ; et $R_2$ est choisi parmi un groupe alkyle linéaire ou ramifié ou aryle ; un groupe hydroxyle ; ou H ; ou
dans lequel $R_1$ est choisi parmi un groupe alkylène linéaire ou ramifié ou arylène ; ou une liaison covalente ; et $R_2$ est choisi parmi un groupe acide carboxylique, un groupe acide sulfurique, un groupe acide sulfinique, un groupe acide sulfonique, un acide hydroxamique, ou un sel de ceux-ci ;
l'obtention d'une deuxième composition comprenant un polymère polycationique ou une dispersion de nanoparticules d'oxyde inorganique ; et
la mise en place sur un substrat d'une pluralité de couches par auto-assemblage couche par couche de la première composition et de la deuxième composition.

**2.** Procédé selon la revendication 1, dans lequel la pluralité de couches a un indice de réfraction d'au moins 1,60, 1,62, 1,64, 1,66, 1,68, 1,70, 1,72, 1,74, ou 1,76.

**3.** Procédé selon la revendication 1 ou la revendication 2, dans lequel la première composition a un pH d'au moins 8,0.

**4.** Procédé selon l'une quelconque des revendications 1 à 3, dans lequel la première composition et la deuxième composition sont chacune disposées sur le substrat pour former au moins 4 bicouches.

**5.** Procédé selon l'une quelconque des revendications 1 à 4, dans lequel la première composition contient un alpha-hydroxy acide ou sel, en excès, lors d'une mise en place sur le substrat.

**6.** Article comprenant :

un substrat ; et
une pluralité de couches comprenant des bicouches, dans lequel une partie des couches comprennent des nanoparticules de zircone modifiées en surface fonctionnalisées avec un alpha-hydroxy acide ou un sel de celui-ci, dans lequel l'alpha-hydroxy acide ou sel est de Formule I :

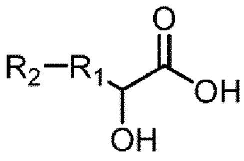

I

dans lequel $R_1$ est choisi parmi un polyéther ou un polyalcool ; et $R_2$ est choisi parmi un groupe alkyle linéaire ou ramifié ou aryle ; un groupe hydroxyle ; ou H ; ou
dans lequel $R_1$ est choisi parmi un groupe alkylène linéaire ou ramifié ou arylène ; ou une liaison covalente ; et $R_2$ est choisi parmi un groupe acide carboxylique, un groupe acide sulfurique, un groupe acide sulfinique, un groupe acide sulfonique, un acide hydroxamique, ou un sel de ceux-ci.

**7.** Article selon la revendication 6, dans lequel une partie des couches comprennent un polymère polycationique ou des nanoparticules d'oxyde inorganique.

**8.** Article selon la revendication 6 ou la revendication 7, dans lequel la pluralité de couches a un indice de réfraction d'au moins 1,60, 1,62, 1,64, 1,66, 1,68, 1,70, 1,72, 1,74, ou 1,76.

**9.** Article selon l'une quelconque des revendications 6 à 8, dans lequel le substrat est un matériau polymère inorganique ou organique à transmission de lumière visible.

**10.** Article selon l'une quelconque des revendications 7 à 9, dans lequel les bicouches comprennent des premières

couches et deuxièmes couches alternées, dans lequel les premières couches comprennent les nanoparticules de zircone modifiées en surface et les deuxièmes couches comprennent le polymère polycationique ou les nanoparticules d'oxyde inorganique.

**11.** Article selon l'une quelconque des revendications 6 à 10, comprenant au moins 15 bicouches.

**12.** Miroir diélectrique comprenant:

un substrat ;
un premier empilement de bicouches disposé sur le substrat ; et
un deuxième empilement de bicouches positionné en contact plan avec le premier empilement ;
dans lequel chaque bicouche dans le premier empilement de bicouches comprend la partie de couches selon la revendication 6 comprenant des nanoparticules de zircone modifiées en surface ; et
dans lequel le deuxième empilement de bicouches présente un indice de réfraction inférieur à 1,50.

**13.** Miroir diélectrique selon la revendication 12, dans lequel le premier empilement de bicouches présente un indice de réfraction supérieur à l'indice de réfraction présenté par le deuxième empilement de bicouches d'au moins 0,30, ou 0,35, ou 0,40, ou 0,45, ou 0,50.

**14.** Article rétroréfléchissant à lentilles exposées comprenant :

une couche de liant ;
une couche de microsphères transparentes partiellement noyées dans la couche de liant ; et
une couche réfléchissante disposée entre la couche de liant et les microsphères, la couche réfléchissante comprenant le miroir diélectrique selon la revendication 12.

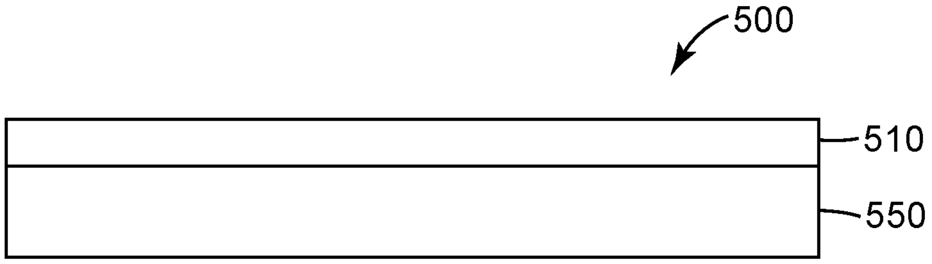


Fig. 1

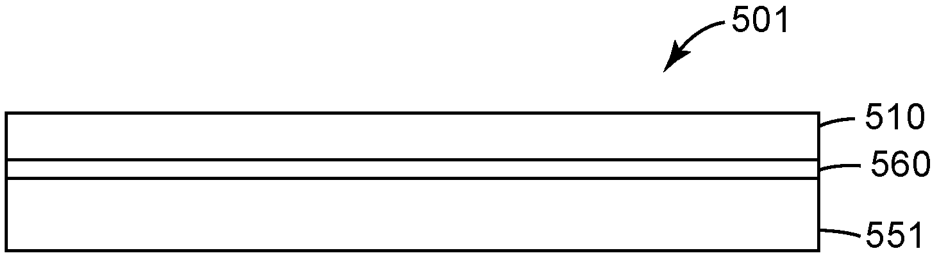


Fig. 2

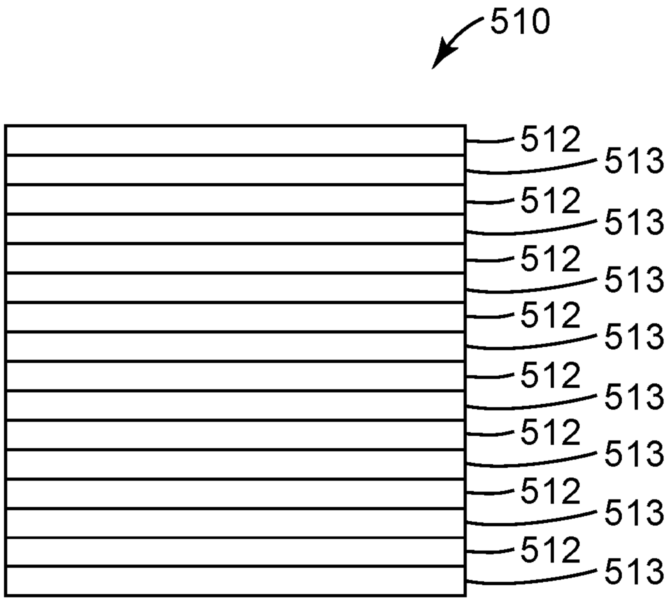


Fig. 3

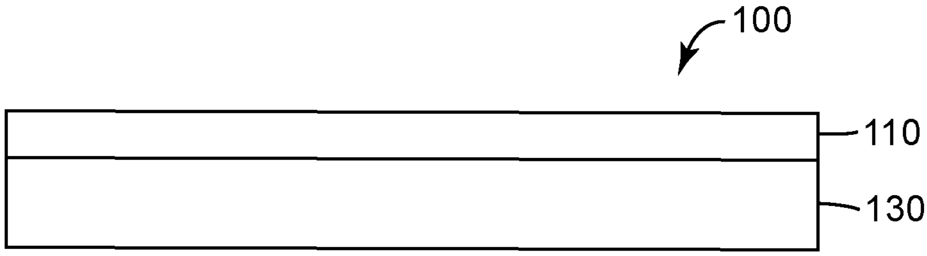


*Fig. 4*

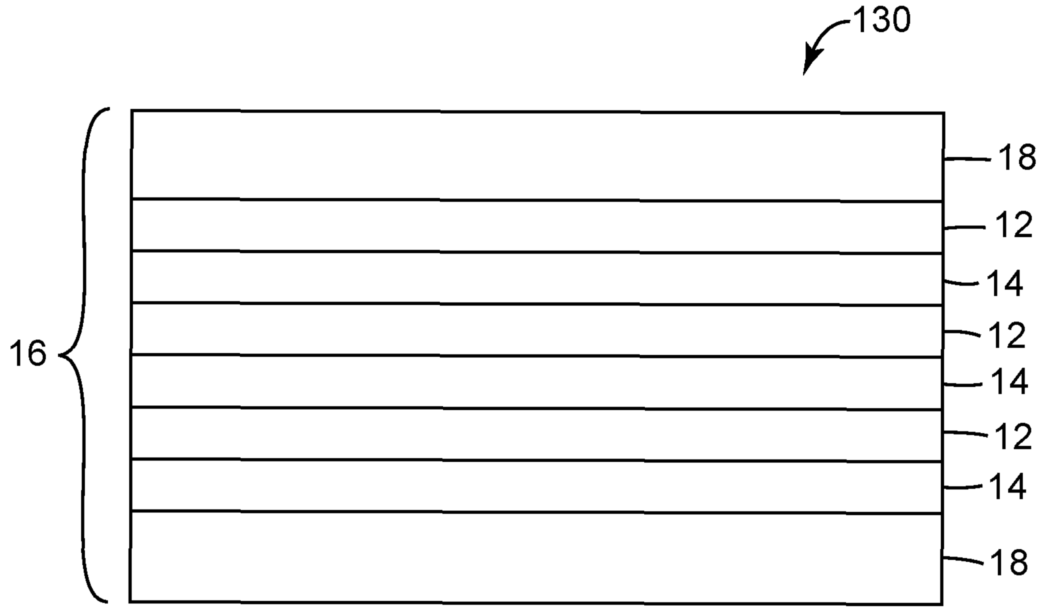


*Fig. 4A*

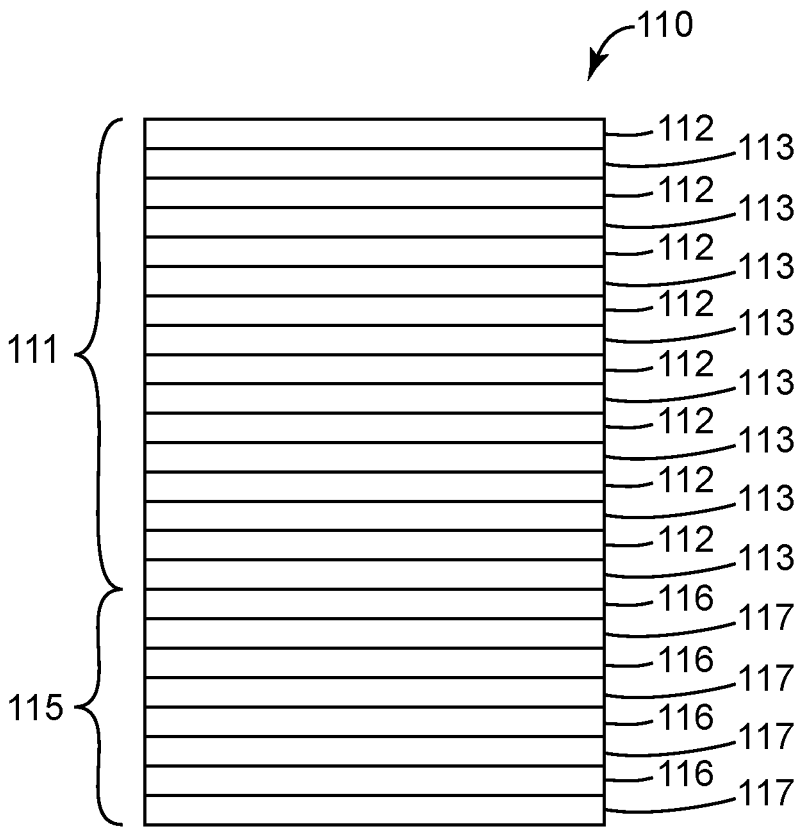
110
111
115
112
113
112
113
112
113
112
113
112
113
112
113
112
113
112
113
116
117
116
117
116
117
116
117

*Fig. 4B*

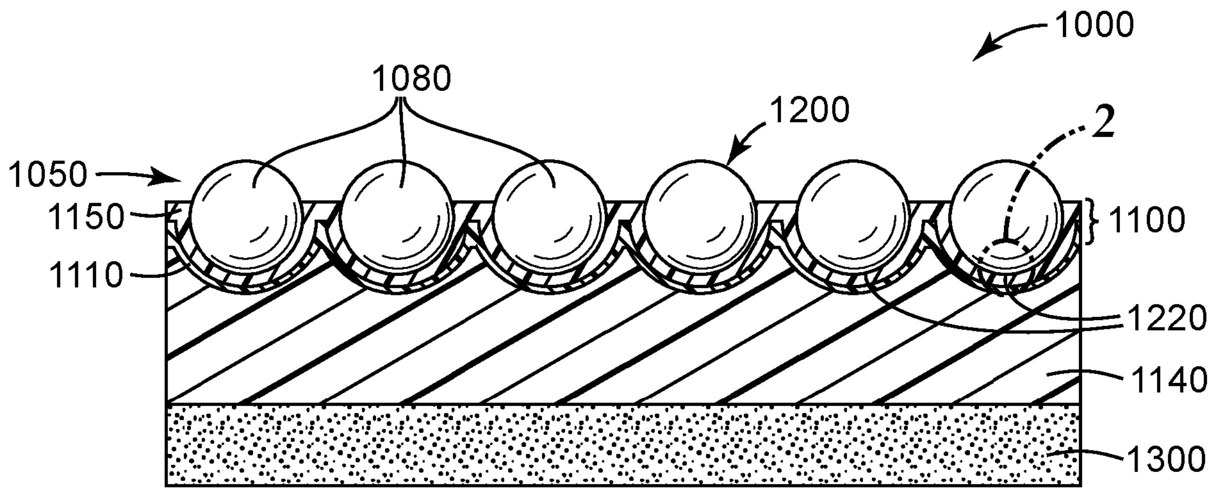
1000
1080
1200
2
1050
1150
1110
1100
1220
1140
1300

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013052927 A, Krogman
- US 2009061183 A
- WO 2009029856 A
- EP 2463231 A
- US 2015301247 A
- WO 2016039820 A
- WO 2015095317 A
- US 20100290109 A
- US 20060148950 A, Davidson
- US 6376590 B, Kolb
- US 8234998 B, Krogman
- US 20110064936 A, Hammond-Cunningham
- US 8313798 B, Nogueira
- US 5126394 A, Revis
- WO 2014193550 A, Schmidt
- US 8277899 B, Krogman
- WO 2012112624 A, Olmeijer
- US 5882774 A, Jonza
- WO 2014099367 A, Schmidt
- US 6352761 B, Hebrink
- US 6449093 B, Hebrink
- US 6449093 B2, Hebrink
- US 20060084780 A, Hebrink
- US 6783349 B, Neavin
- US 7153588 B, McMan
- WO 2013142239 A, Clear
- WO 2009085926 A2, Kolb
- US 5474827 A


### Non-patent literature cited in the description


- **ILKER DINCER et al.** Effect of the number of iron oxide nanoparticle layers on the magnetic properties of nanocomposite LbL assemblies. *JOURNAL OF MAGNETISM AND MAGNETIC MATERIALS,* 15 May 2012, vol. 324 (19), ISSN 0304-8853, 2958-2963
- **M. BERG et al.** *PROCEEDINGS OF SPIE,* 16 March 2006, vol. 6172, ISSN 0277-786X, 61720W-61720W, 5
- **KROGMAN et al.** Automated Process for Improved Uniformity and Versatility of Layer-by-Layer Deposition. *Langmuir,* 2007, vol. 23, 3137-3141